(19) Europäisches Patentamt
European Patent Office
Office européen des brevets

(11) **EP 4 637 088 A1**

(12) **EUROPEAN PATENT APPLICATION**
published in accordance with Art. 153(4) EPC

(43) Date of publication:
**22.10.2025 Bulletin 2025/43**

(21) Application number: **23917926.0**

(22) Date of filing: **27.12.2023**

(51) International Patent Classification (IPC):
**H04L 25/02** (2006.01)       **H04L 5/00** (2006.01)
**H04L 27/01** (2006.01)

(52) Cooperative Patent Classification (CPC):
**H04L 5/00; H04L 25/02; H04L 27/01**

(86) International application number:
**PCT/KR2023/021757**

(87) International publication number:
**WO 2024/154974 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2023   KR 20230008772
30.01.2023   KR 20230011621**

(71) Applicant: **Samsung Electronics Co., Ltd.
Suwon-si, Gyeonggi-do 16677 (KR)**

(72) Inventors:
• **CHOI, Sangwon**
  **Suwon-si Gyeonggi-do 16677 (KR)**
• **KIM, Kyeongyeon**
  **Suwon-si Gyeonggi-do 16677 (KR)**
• **SEO, Juhwan**
  **Suwon-si Gyeonggi-do 16677 (KR)**

(74) Representative: **HGF
HGF Limited
1 City Walk
Leeds LS11 9DX (GB)**

(54) **ELECTRONIC DEVICE AND METHOD FOR RECEIVING SIGNAL IN WIRELESS COMMUNICATION SYSTEM**

(57)      According to an embodiment, a method performed by means of an electronic device comprises an operation of obtaining a signal on a plurality of resource elements (REs). The method comprises the operations of: selecting reference REs from the plurality of REs on the basis of the time interval between symbols and the frequency interval between the symbols; performing channel estimation on the basis of the reference REs; obtaining, on the basis of a result of the channel estimation, a plurality of first weights corresponding to the reference REs; obtaining, on the basis of the plurality of first weights, a plurality of second weights corresponding to other REs that are distinct from the reference REs from among the plurality of REs; and obtaining, on the basis of the plurality of first weights and the plurality of second weights, information corresponding to the signal.

FIG. 7

**Description**

**[Technical Field]**

The present disclosure relates to a wireless communication system, and more particularly, to an electronic device and a method for receiving a signal in the wireless communication system.

**[Background Art]**

In order to improve transmission and reception performance of a signal, a multiple-input multiple-output (MIMO) technology is used. A wireless communication system using the MIMO technology uses multiple antennas at both a transmitting end and a receiving end. The channel capacity of the wireless communication system using the MIMO technology may be greatly improved compared to a single antenna technology.

**[Disclosure]**

**[Technical Solution]**

According to an embodiment, a method performed by an electronic device may comprise obtaining a signal on a plurality of resource elements (REs). The method may comprise selecting, based on a time interval between symbols and a frequency interval between symbols, reference REs from among the plurality of REs. The method may comprise performing, based on the reference REs, channel estimation. The method may comprise obtaining, based on a result of the channel estimation, a plurality of first weights corresponding to the reference REs. The method may comprise obtaining, based on the plurality of first weights, a plurality of second weights corresponding to other REs distinct from the reference REs from among the plurality of REs. The method may comprise obtaining, based on the plurality of first weights and the plurality of second weights, information corresponding to the signal.

According to an embodiment, an electronic device may comprise at least one processor and a transceiver. The at least one processor may be configured to obtain a signal on a plurality of resource elements (REs). The at least one processor may be configured to select, based on a time interval between symbols and a frequency interval between symbols, reference REs from among the plurality of REs. The at least one processor may be configured to perform, based on the reference REs, channel estimation. The at least one processor may be configured to obtain, based on a result of the channel estimation, a plurality of first weights corresponding to the reference REs. The at least one processor may be configured to obtain, based on the plurality of first weights, a plurality of second weights corresponding to other REs distinct from the reference REs from among the plurality of REs. The at least one processor may be configured to obtain, based on the plurality of first weights and the plurality of second weights, information corresponding to the signal.

According to an embodiment, a method for receiving a signal may comprise obtaining a signal on a plurality of resource elements (REs). The method may comprise selecting, based on a time interval between symbols and a frequency interval between symbols, reference REs from among the plurality of REs. The method may comprise performing, based on the reference REs, channel estimation. The method may comprise obtaining, based on a result of the channel estimation, a plurality of first weights corresponding to the reference REs. The method may comprise obtaining, based on the plurality of first weights, a plurality of second weights corresponding to other REs distinct from the reference REs from among the plurality of REs. The method may comprise obtaining, based on the plurality of first weights and the plurality of second weights, information corresponding to the signal.

According to an embodiment, a digital unit (DU) may comprise memory storing instructions, at least one processor, and a transceiver. The instructions, when executed by the at least one processor, may cause the DU to obtain a signal on a plurality of resource elements (REs). The instructions, when executed by the at least one processor, may cause the DU to select, based on a time interval between symbols and a frequency interval between symbols, reference REs from among the plurality of REs. The instructions, when executed by the at least one processor, may cause the DU to perform, based on the reference REs, channel estimation. The instructions, when executed by the at least one processor, may cause the DU to obtain, based on a result of the channel estimation, a plurality of first weights corresponding to the reference REs. The instructions, when executed by the at least one processor, may cause the DU to obtain, based on the plurality of first weights, a plurality of second weights corresponding to other REs distinct from the reference REs from among the plurality of REs. The instructions, when executed by the at least one processor, may cause the DU to obtain, based on the plurality of first weights and the plurality of second weights, information corresponding to the signal.

According to an embodiment, a radio unit (RU) may comprise memory storing instructions, at least one processor, and a transceiver. The instructions, when executed by the at least one processor, may cause the RU to obtain a signal on a plurality of resource elements (REs). The instructions, when executed by the at least one processor, may cause the RU to select, based on a time interval between symbols and a frequency interval between symbols, reference REs from among the plurality of REs. The instructions, when executed by the at least one processor, may cause the RU to perform, based on the reference REs, channel estimation. The instructions, when executed by the at least one processor, may cause the RU to obtain, based on a result of the channel estimation, a plurality of first weights corresponding to the reference REs. The instructions, when executed by the at least one processor, may cause the RU to obtain, based on the plurality of first weights, a plurality of second weights corresponding to other REs distinct from the reference REs from among the plurality of REs. The instructions, when executed by the at least one processor, may cause the RU to obtain, based on the plurality of first weights and the plurality of second weights, information corresponding to the signal.

According to an embodiment, a non-transitory computer readable storage medium may store instructions. The instructions, when executed by a processor of a digital unit (DU), may cause the DU to obtain a signal on a plurality of resource elements (REs). The instructions, when executed by a processor of a digital unit (DU), may cause the DU to select, based on a time interval between symbols and a frequency interval between symbols, reference REs from among the plurality of REs. The instructions, when executed by a processor of a digital unit (DU), may cause the DU to perform, based on the reference REs, channel estimation. The instructions, when executed by a processor of a digital unit (DU), may cause the DU to obtain, based on a result of the channel estimation, a plurality of first weights corresponding to the reference REs. The instructions, when executed by a processor of a digital unit (DU), may cause the DU to obtain, based on the plurality of first weights, a plurality of second weights corresponding to other REs distinct from the reference REs from among the plurality of REs. The instructions, when executed by a processor of a digital unit (DU), may cause the DU to obtain, based on the plurality of first weights and the plurality of second weights, information corresponding to the signal.

[Description of the Drawings]

FIG. 1 illustrates a wireless communication system.
FIG. 2 illustrates a fronthaul interface.
FIG. 3 illustrates an example of a resource structure in a time domain and a frequency domain.
FIG. 4 illustrates an example of channels in a communication standard.
FIG. 5 illustrates an example of a demodulation reference signal (DMRS) in a slot.
FIG. 6 illustrates an example of functional blocks for performing equalization through a minimum mean-square error (MMSE) weight.
FIG. 7 illustrates an example of functional blocks for performing equalization using a weight based on sparsity.
FIG. 8 illustrates a flowchart related to an operation for calculating a weight based on sparsity.
FIG. 9 indicates a position of a sparse RE set according to frequency sparsity.
FIG. 10 indicates a position of a sparse RE set according to a DMRS port and frequency sparsity.
FIG. 11 illustrates an example of an operation of a receiver for identifying a weight for all remaining data REs.
FIG. 12 illustrates an example of an operation for identifying a weight based on a copy mode.
FIG. 13 illustrates a flowchart related to an operation of an electronic device.
FIG. 14 illustrates an example of a functional configuration of an electronic device.

[Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In the following description, a term referring to a signal (e.g., signal, information, symbol, message, signaling, reference signal (RS), data), a term referring to a resource (e.g., symbol, slot, subframe, radio frame, subcarrier, resource element (RE), resource block (RB), bandwidth part (BWP), and occasion), a term for a computational state (e.g., step, operation, and procedure), a term referring to data (e.g., packet, user stream, information, bit, symbol, and codeword), a term referring to a channel, a term referring to network entities, a term referring to a component of a device, and the like are illustrated for convenience of description. Therefore, the present disclosure is not limited to the terms described below, and other terms having the same technical meanings may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

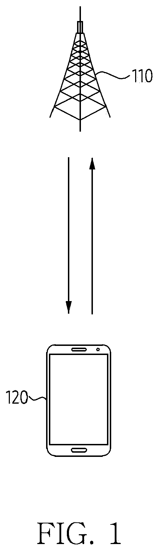

FIG. 1 illustrates an example of a wireless communication system.

Referring to FIG. 1, FIG. 1 illustrates a base station 110 and a terminal 120 as a portion of nodes using a wireless channel in a wireless communication system. Although FIG. 1 illustrates only one base station, the wireless communication system may further include another base station identical to or similar to the base station 110.

The base station 110 is a network infrastructure for providing wireless access to the terminal 120. The base station 110 has coverage defined based on a distance at which a signal may be transmitted. In addition to a base station, the base station 110 may be referred to as an 'access point (AP)', an 'eNode B (eNB)', a '5th generation node', a 'next generation node B (gNB)', a 'wireless point', a 'transmission/reception point (TRP)', or another term having a technical meaning equivalent thereto.

The terminal 120, which is a device used by a user, communicates with the base station 110 through the wireless channel. A link from the base station 110 to the terminal 120 is referred to as downlink (DL), and a link from the terminal 120 to the base station 110 is referred to as uplink (UL). In addition, although not illustrated in FIG. 1, the terminal 120 and another terminal may perform communication with each other through the wireless channel. In this case, a device-to-device link (D2D) between the terminal 120 and the other terminal is referred to as a sidelink, and the sidelink may be used interchangeably with a PC5 interface. In some other embodiments, the terminal 120 may be operated without user involvement. According to an embodiment, the terminal 120, which is a device that performs machine type communication (MTC), may not be carried by the user. In addition, according to an embodiment, the terminal 120 may be a MTC UE or a narrowband (NB)-internet of things (IoT) device.

In addition to a terminal, the terminal 120 may be referred to as 'user equipment (UE)', 'customer premises equipment (CPE)', a 'mobile station', a 'subscriber station', a 'remote terminal', a 'wireless terminal', an 'electronic device', or another term having a technical meaning equivalent thereto.

The base station 110 may perform beamforming with the terminal 120. The base station 110 and the terminal 120 may transmit and receive a wireless signal in a relatively low frequency band (e.g., a frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3), or FR 3 of NR), and a mmWave band (e.g., 28GHz, 30GHz, 38GHz, or 60GHz). To improve a channel gain, the base station 110 and the terminal 120 may perform the beamforming. Herein, the beamforming may include transmission beamforming and reception beamforming. The base station 110 and the terminal 120 may assign directivity to a transmission signal or a reception signal. To this end, the base station 110 and the terminal 120 may select serving beams through a beam search or beam management procedure. After the serving beams are selected, subsequent communication may be performed through a resource that is in a QCL relationship with a resource that has transmitted the serving beams.

If large-scale characteristics of a channel transmitting a symbol on a first antenna port may be estimated from a channel transmitting a symbol on a second antenna port, the first antenna port and the second antenna port may be evaluated to be in the QCL relationship. For example, the large-scale characteristics may include at least one of a delay spread, a Doppler spread, a Doppler shift, an average gain, an average delay, and a spatial receiver parameter.

In FIG. 1, it has been described that both the base station 110 and the terminal 120 perform the beamforming, but embodiments of the present disclosure are not necessarily limited thereto. In some embodiments, the terminal may or may not perform the beamforming. Also, the base station may or may not perform the beamforming. That is, only one of the base station and the terminal may perform the beamforming, or both the base station and the terminal may not perform the beamforming.

In the present disclosure, a beam, which refers to a spatial flow of a signal in a wireless channel, may be formed by one or more antennas (or antenna elements), and this formation process may be referred to as beamforming. The beamforming may include at least one of analog beamforming or digital beamforming (e.g., precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, IE such as a CSI-RS resource or an SRS-resource, and the like, may be used as a configuration with respect to each reference signal, and this configuration may include information associated with the beam. The information associated with the beam may mean whether a corresponding configuration (e.g., the CSI-RS resource) uses the same spatial domain filter as another configuration (e.g., another CSI-RS resource within the same CSI-RS resource set) or a different spatial domain filter, or whether it is quasi-co-located (QCL) with a certain reference signal and, if it is QCL, what type (e.g., QCL type A, B, C, or D) it is.

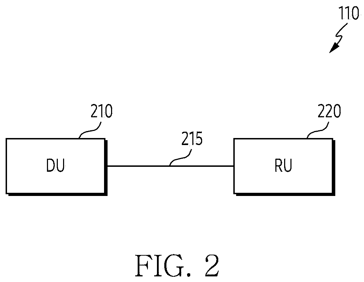

FIG. 2 illustrates a fronthaul interface. The fronthaul refers to between entities between a wireless LAN and a base station, unlike a backhaul between a base station and a core network. In FIG. 2, it illustrates an example of a fronthaul structure between a DU 210 and one RU 220, but this is only for convenience of explanation and the present disclosure is not limited thereto. In other words, an embodiment of the present invention may also be applied to a fronthaul structure between one DU and a plurality of RUs. For example, the embodiment of the present disclosure may be applied to a fronthaul structure between one DU and two RUs. In addition, the embodiment of the present disclosure may be applied to a fronthaul structure between one DU and three RUs.

Referring to FIG. 2, the base station 110 may include the DU 210 and the RU 220. A fronthaul 215 between the DU 210 and the RU 220 may be operated through an Fx interface. For an operation of the fronthaul 215, for example, an interface such as an enhanced common public radio interface (eCPRI) and a radio over Ethernet (ROE) may be used.

With development of communication technology, mobile data traffic has increased, and accordingly, a bandwidth requirement amount required by a fronthaul between a digital unit and a wireless unit have increased significantly. In a disposition such as a centralized/cloud radio access network (C-RAN), the DU may be implemented to perform functions with respect to a packet data convergence protocol (PDCP), a radio link control (RLC), a media access control (MAC), and physical (PHY), and the RU may be implemented to perform more functions with respect to a PHY layer in addition to a radio frequency (RF) function.

The DU 210 may handle an upper layer function of a wireless network. For example, the DU 210 may perform a function of a MAC layer and a portion of the PHY layer. Herein, the portion of the PHY layer, which is performed at a higher level among functions of the PHY layer, may include, for example, channel encoding (or channel decoding), scrambling (or descrambling), modulation (or demodulation), layer mapping (or layer demapping). According to an embodiment, in a case that the DU 210 follows an O-RAN standard, it may be referred to as an O-RAN DU (O-DU). The DU 210 may be represented by being replaced with a first network entity for a base station (e.g., gNB) in embodiments of the present disclosure as needed.

The RU 220 may handle a lower layer function of the wireless network. For example, the RU 220 may perform a portion of the PHY layer and an RF function. Herein, the portion of the PHY layer, which is performed at a relatively lower level than the DU 210 among the functions of the PHY layer, may include, for example, iFFT conversion (or FFT conversion), CP insertion (CP removal), and digital beamforming. The RU 220 may be referred to as an 'access unit (AU)', an 'access point (AP)', a 'transmission/reception point (TRP)', a 'remote radio head (RRH)', a 'radio unit (RU)', or another term having a technical meaning equivalent thereto. According to an embodiment, in a case that the RU 220 follows the O-RAN standard, it may be referred to as an O-RAN RU (O-RU). The RU 220 may be represented by being replaced with a second network entity for the base station (e.g., the gNB) in the embodiments of the present disclosure as needed.

In FIG. 2, it is illustrated that the base station 110 includes the DU 210 and the RU 220, but the embodiments of the present disclosure are not limited thereto. The base station according to the embodiments may be implemented as a distributed deployment according to a centralized unit (CU) configured to perform functions of upper layers (e.g., a packet data convergence protocol (PDCP), or a radio resource control (RRC)) of an access network, and a distributed unit (DU) configured to perform functions of lower layers. As an example, the distributed unit (DU) may include the digital unit (DU) and the radio unit (RU) of FIG. 1. As another example, the DU may be referred to as a node implemented to perform protocols of CU and DU according to a function split. In addition, as an example, between a core (e.g., a 5G core or a next generation core (NGC)) network and a wireless network (RAN), the base station may be implemented in a structure disposed in an order of the CU, the DU, and the RU. An interface between the CU and the distributed unit (DU) may be referred to as an F1 interface.

The centralized unit (CU) may handle a function of a higher layer than the DU by being connected to one or more DUs. For example, the CU may handle a function of a radio resource control (RRC) and packet data convergence protocol (PDCP) layer, and the DU and the RU may handle a function of a lower layer. The DU may perform radio link control (RLC), media access control (MAC), and some functions (high PHY) of the physical (PHY) layer, and the RU may handle remaining functions (low PHY) of the PHY layer. In addition, as an example, the digital unit (DU) may be included in the distributed unit (DU) according to the distributed deployment implementation of the base station. Hereinafter, it is described as operations of the digital unit (DU) and the RU unless otherwise defined, but various embodiments of the present disclosure may be applied to both a base station deployment including the CU, or a deployment in which the DU is directly connected to a core network (i.e., implemented by being integrated as a base station (e.g., a NG-RAN node) in which the CU and the DU are one entity).

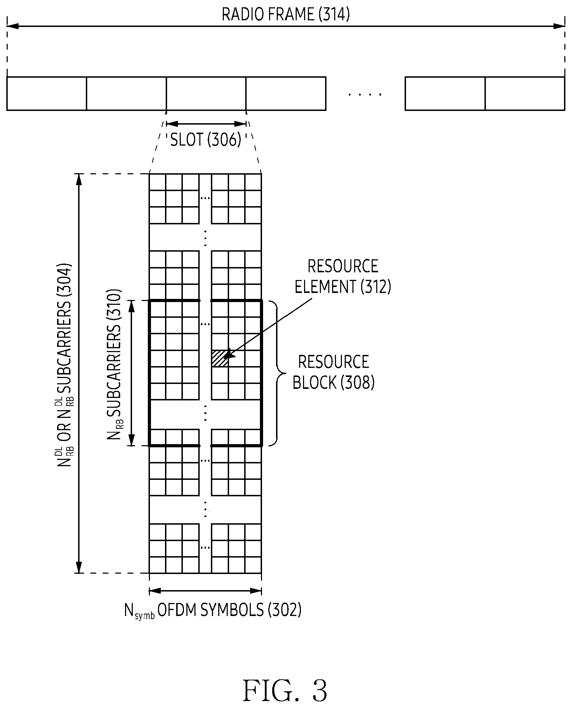

FIG. 3 illustrates an example of a resource structure in a time region and a frequency region. FIG. 3 illustrates a basic structure of a time-frequency region, which is a radio resource region in which data or a control channel is transmitted in downlink or uplink.

Referring to FIG. 3, a horizontal axis indicates the time region and a vertical axis indicates the frequency region. A minimum transmission unit in the time region is an orthogonal frequency division multiplexing (OFDM) symbol, and $N_{symb}$ OFDM symbols 302 constitute one slot 306. A length of a subframe is defined as 1.0 ms, and a length of a radio frame 314 is defined as 10 ms. A minimum transmission unit in the frequency region is a subcarrier, and a carrier bandwidth constituting a resource grid is composed of $N_{BW}$ subcarriers 304.

A basic unit of a resource in the time-frequency region is a resource element (hereinafter, 'RE') 312, which may be indicated by an OFDM symbol index and a subcarrier index. A resource block may include a plurality of resource elements. In an LTE system, a resource block (RB) (or a physical resource block, hereinafter, 'PRB') is defined as $N_{symb}$ consecutive OFDM symbols in the time region and $N_{SC}^{RB}$ consecutive subcarriers in the frequency region. In an NR system, a resource block (RB) 308 may be defined as $N_{SC}^{RB}$ consecutive subcarriers 310 in the frequency region. One RB 308 includes $N_{SC}^{RB}$ REs 312 in the frequency axis. In general, a minimum unit of transmission of data is an RB and the number of subcarriers, $N_{SC}^{RB}$, is 12. The frequency region may include common resource blocks (CRBs). A physical resource block (PRB) may be defined in a bandwidth part (BWP) on the frequency region. CRB and PRB numbers may be determined according to subcarrier spacing. A data rate may increase in proportion to the number of RBs scheduled for a terminal.

In an NR system, in a case of a frequency division duplex (FDD) system that operates by separating downlink and uplink by frequency, downlink transmission bandwidth and uplink transmission bandwidth may be different from each other. Channel bandwidth indicates radio frequency (RF) bandwidth corresponding to system transmission bandwidth. Table 1 illustrates a portion of a correspondence among system transmission bandwidth, subcarrier spacing (SCS), and channel bandwidth defined in an NR system in a frequency range lower than x GHz (e.g., a frequency range (FR) 1 (310 MHz to 7125 MHz)). And Table 2 illustrates a portion of a correspondence among transmission bandwidth, subcarrier spacing (SCS), and channel bandwidth defined in the NR system in a frequency range higher than y GHz (e.g., an FR2 (24250 MHz - 52600 MHz) or an FR2-2 (52600 MHz to 71000 MHz)). For example, in an NR system having 100 MHz channel bandwidth at 30 kHz subcarrier spacing, transmission bandwidth is composed of 273 RBs. In Table 1 and Table 2, N/A may be a bandwidth-subcarrier combination not supported in an NR system.

[Table 1]

| Channel bandwidth [MHz 1 | SCS | 5 | 10 | 20 | 50 | 80 | 100 |
|---|---|---|---|---|---|---|---|
| Transmission bandwidth configuration | 15kHz | 25 | 52 | 106 | 207 | N/A | N/A |
| | 30kHz | 11 | 24 | 51 | 133 | 217 | 273 |
| $N_{RB}$ | 60kHz | N/A | 11 | 24 | 65 | 107 | 135 |

[Table 2]

| Channel bandwidth [MHz] | SCS | 50 | 100 | 200 | 400 |
|---|---|---|---|---|---|
| Transmission bandwidth configuration $N_{RB}$ | 60kHz | 66 | 132 | 264 | N/A |
| | 120kHz | 32 | 66 | 132 | 264 |

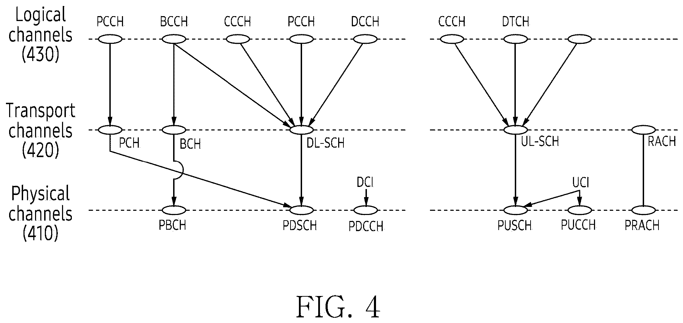

FIG. 4 illustrates an example of channels in a communication standard. FIG. 4 illustrates an example of channels in a communication standard. The channels may include a physical channel 410, a transport channel 420, and a logical channel 430, in accordance with layers defined in the communication standard.

Referring to FIG. 4, the physical channel 410 may provide functions (e.g., channel coding, HARQ processing, modulation, multiple antenna processing, and resource mapping) necessary to generate physical signals in a physical layer. In the physical layer, the physical signals may be modulated in an OFDM manner and may be transmitted in a wireless environment through a time-frequency resource (e.g., a resource of the resource grid of FIG. 3).

In a downlink transmission, the physical channel 410 may include at least one of a physical broadcast channel (PBCH), a physical downlink shared channel (PDSCH), or a physical downlink control channel (PDCCH). The PDCCH may be used to carry downlink control information (DCI). In general, downlink data may refer to symbols transmitted through the PDSCH, and a downlink control signal may include symbols transmitted through the PDCCH. In addition, in a downlink, in addition to the channels illustrated in FIG. 4, an SS/PBCH block including a synchronization signal (e.g., a primary synchronization signal (PSS) and a secondary synchronization signal (SSS)), and a broadcast signal (e.g., PBCH), may be transmitted for synchronization. In addition, in the downlink, a channel state information-reference signal (CSI-RS) for measurement or obtaining channel information, a demodulation reference signal (DMRS) for channel estimation and demodulation, and a phase tracking reference signal (PTRS) may be transmitted.

In an uplink transmission, the physical channel 410 may include at least one of a physical uplink shared channel (PUSCH), a physical uplink control channel (PUCCH), or a physical random access channel (PRACH). The PUSCH or the PUCCH may be used to carry uplink control information (UCI). In general, uplink data may refer to symbols transmitted through the PUSCH, and an uplink control signal may include symbols corresponding to the UCI. For example, the UCI may include at least one of a scheduling request (SR), hybrid automatic request acknowledgement (HARQ-ACK) bit(s), or channel state information (CSI). In addition, in an uplink, in addition to the channels illustrated in FIG. 4, a DMRS for channel estimation and demodulation, and a PTRS may be transmitted for channel estimation.

The transport channel 420 may connect a physical layer and a medium access channel (MAC) layer positioned at a higher level of the physical layer, and may be classified in accordance with how data is transmitted through a radio interface. In the downlink, the transmission channel 420 may include at least one of a paging channel (PCH) for paging, a broadcast channel (BCH) for broadcasting system information, or a downlink shared channel (DL-SCH) for transmitting downlink data. In the uplink, the transmission channel 420 may include at least one of a random access channel (RACH) for transmitting a random access preamble or an uplink shared channel (UL-SCH) for transmitting downlink data.

The logical channel 430 is positioned above a transport channel and is mapped to the transport channel 420. The logical channel 430 may be classified into a control channel for transmitting control region information and a traffic channel for transmitting user region information. The control channel of the logical channel 430 may include at least one of a paging control channel (PCCH), a broadcast control channel (BCCH), a common control channel (CCCH), or a dedicated control channel (DCCH). The traffic channel of the logical channel 430 may include a dedicated traffic channel (DTCH).

In describing embodiments of the present disclosure, 'Data' may include signals other than a reference signal. As an example, 'data' obtained by a receiver in uplink communication may include signals transmitted through the PUSCH. However, the PUSCH is merely exemplary, and embodiments of the present disclosure may also be applied to other channels (e.g., PDSCH, PBCH, PDCCH, and PUCCH) that require channel estimation.

A multiple-input multiple-output (MIMO) technology is a field that has recently attracted significant attention, and active research on the MIMO technology is being conducted. In a situation in which a channel between a transmission antenna and a reception antenna is independent, the number of transmitting antennas and the number of receiving antennas are all the same as M, and a bandwidth and total transmission power are fixed, an average channel capacity increases by approximately M times compared to a single antenna. For example, in a MIMO environment, a receiving method may include a minimum mean-square error (MMSE), or a maximum ratio combine (MRC). In the present disclosure, a whitening technique that may improve performance of the receiving method (e.g., the MMSE, or the MRC) is described based on both interference of another cell and adaptive white gaussian noise (AWGN) when receiving a signal. In order to describe the above-described whitening technique, a receiving situation of uplink transmission (e.g., PUSCH transmission) in an LTE communication system or an NR communication system is described as an example, but embodiments of the present disclosure are not limited thereto. Embodiments of the present disclosure may also be applied to a case of receiving signals according to another communication system (e.g., IEEE 802.11 or 802.16e).

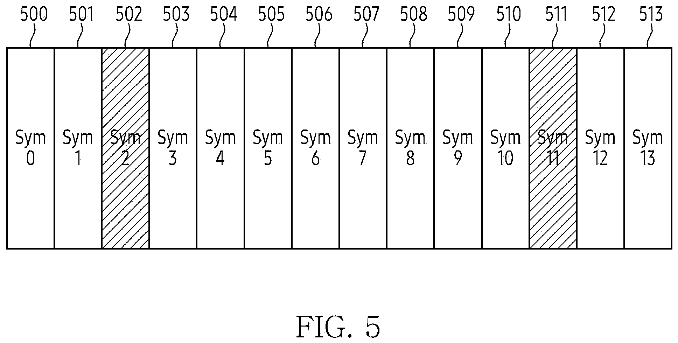

FIG. 5 illustrates an example of a demodulation reference signal (DMRS) within a slot. The DMRS is a reference signal (RS) used for demodulating data. The DMRS may be used to estimate a channel to demodulate data (e.g., PDSCH or PUSCH) and obtain a result of channel estimation. Hereinafter, to describe channel estimation and operations using the DMRS for the channel estimation of the present disclosure, an uplink transmission of an NR communication system is described as an example. However, embodiments of the present disclosure are not limited to an uplink of the NR communication system. Of course, embodiments of the present disclosure may also be applied to a downlink or another communication system.

Referring to FIG. 5, a base station (e.g., a base station 110) may receive a signal from a terminal (e.g., a terminal 120). The terminal 120 may transmit an uplink signal to the base station 110. The received signal may include data (hereinafter, reception data) received on an uplink channel (e.g., PUSCH). The reception data may be transmitted in data symbols of a time domain. In addition, the received signal may include reference signals (hereinafter, reception reference signals) (e.g., DMRS) for channel estimation and coherent demodulation of the data symbols. The reception reference signals may be transmitted in DMRS symbols of the time domain. The base station 110 may receive the reception data in the data symbols of a slot and receive the reception reference signals in the DMRS symbols, from the terminal 120. A slot may include 14 symbols (e.g., a symbol #0 500, a symbol #1 501, a symbol #2 502, a symbol #3 503, a symbol #4 504, a symbol #5 505, a symbol #6 506, a symbol #7 507, a symbol #8 508, symbol #9 509, a symbol #10 510, a symbol #11 511, a symbol #12 512, and a symbol #13 513). At least some of the 14 symbols may be used to carry DMRS sequences. For example, an interval of the symbol #2 502 and an interval of the symbol #11 511 may include the DMRS symbols.

The base station 110 may estimate a channel between the base station 110 and the terminal 120 through the reception reference signals. The base station 110 may obtain information on a channel experienced by the reception reference signals. For example, the base station 110 may obtain information on a channel experienced by the reception data through a relationship between a position to which the DMRS symbols of the reception reference signals are mapped and positions to which the data symbols of the reception data are mapped. As an example, the base station 110 may obtain the information on the channel experienced by the reception reference signals by performing interpolation in a frequency domain or interpolation in a time domain based on the information on the channel experienced by the reception reference signals. However, since the number of data symbols within one slot, which is a transmission unit, is generally greater than the number of DMRS symbols, an operation of estimating a channel experienced by each data symbol may require a large amount of computation. Furthermore, since a computation for the DMRS symbols themselves or inter-cell interference may not be reflected, reception performance may not be guaranteed. To this end, the base station 110, which is a reception end, may use various reception techniques.

As a signal combining technique is applied to reception signals received through a plurality of receiving antennas, an estimated signal for a data signal may be obtained. For example, the signal combining technique may include maximal ratio combining (MRC), selective combining, or equal gain combining. The MRC technique is a method of combining each data by giving a weight to it. The selective combining technique is a method of selectively combining data, and the equal gain combining technique is a method of giving the same weight to each data and combining it through an average value.

The MRC technique, which is one of receiving techniques using diversity of a signal received through multiple paths in a system using multiple antennas, is known to show optimal performance in a noise-limited environment with a high signal to an interference plus noise ratio (SINR). However, an estimated signal obtained using the MRC technique does not consider influence of an interference signal from an adjacent cell. In addition, a terminal positioned at a cell boundary in an actual multi-cell environment is affected by an adjacent cell and thus has a low SINR. Therefore, a terminal positioned at a cell boundary in a multi-cell environment may not be able to obtain optimal performance using the MRC technique. Interference from another cell as well as AWGN may exist in a cellular system (e.g., a long term evolution (LTE) communication system or a new radio (NR) communication system of 3rd generation partnership project (3GPP)). A noise component may include the interference from the other cell and the AWGN. In an environment in which the interference exists, performance of an MRC receiver using whitening is superior to performance of a general MRC receiver. Conversely, in an environment in which interference does not exist, the performance of the MRC receiver using whitening is the same as the performance of the general MRC receiver. However, for an implementation reason, the performance of the MRC receiver using whitening may be deteriorated compared to the performance of the general MRC receiver. Hereinafter, the MRC receiver using whitening may have a structure in which a block for applying a whitening matrix is added to the MRC receiver to receive a signal, like an MMSE method.

Hereinafter, the present invention relates to an electronic device and a method for receiving a signal with low complexity when receiving the signal in a wireless communication system. Specifically, in the present disclosure, a technical feature for reducing complexity for obtaining a weight (e.g., an MMSE weight) through a minimum mean squared error (MMSE) in a frequency equalizer is described. The electronic device described below may be included in a base station. For example, the electronic device may be included in the DU 210 of FIG. 2 or may be a device that performs at least some or all of the functions of the DU 210.

The present disclosure describes embodiments using terms used in some communication standards (e.g., 3rd generation partnership project (3GPP)), but this is only an example for description. Various embodiments of the present disclosure may be easily modified and applied in other communication and broadcasting systems.

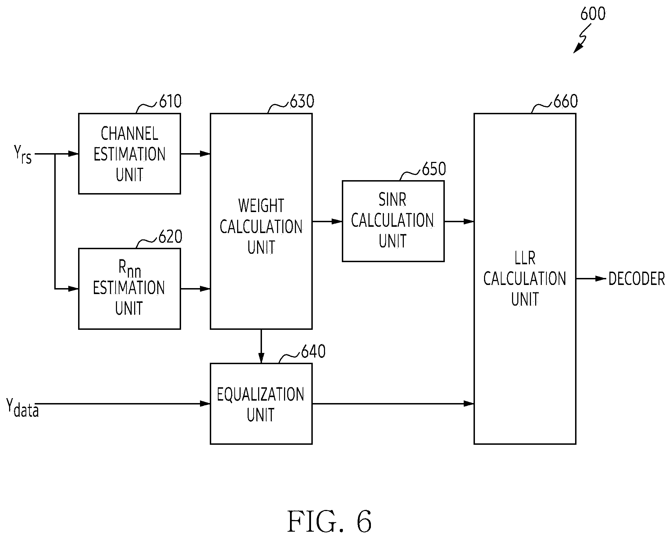

FIG. 6 illustrates an example of functional blocks for performing equalization through a minimum mean-square error (MMSE) weight. The functional blocks may correspond to operations of one or more network entities (e.g., a base station 110, a DU 210, and an RU 220). Hereinafter, a network entity that performs operations corresponding to the functional blocks is described as including an electronic device 600, but the operations may, of course, be performed by a plurality of network entities (e.g., the DU 210 and the RU 220). Hereinafter, the terms '...unit', '...device', and the like used hereinafter mean a unit that processes at least one function or operation, which may be implemented by hardware or software, or a combination of the hardware and the software.

Referring to FIG. 6, the electronic device 600 may include a channel estimation unit 610, an $R_{nn}$ estimation unit 620, a weight calculation unit 630, an equalization unit 640, an SINR calculation unit 650, and an LLR calculation unit 660.

When a received reception signal of a time domain is y, a reception signal of a frequency domain may be represented as Y. A reception signal may include reception reference signals (e.g., DMRSs) and reception data (e.g., a PUSCH signal) for channel estimation and demodulation. The reception reference signals may be represented as $Y_{rs}$. The reception data may be represented as $Y_{data}$.

The channel estimation unit 610 may perform channel estimation based on the reference signal $Y_{rs}$, and may provide a result of the channel estimation to each of the $R_{nn}$ estimation unit 620 and the weight calculation unit.

The $R_{nn}$ estimation unit 620 may calculate $R_{nn}$ based on the reception reference signals (e.g., actual received DMRSs) $Y_{rs}$ and a predetermined sequence (e.g., a DMRS sequence of LTE or NR standard). $R_{nn}$ is a covariance matrix of a noise component and an interference component. Hereinafter, $R_{nn}$ may be described as a noise covariance matrix.

The weight calculation unit 630 may calculate (or obtain) a weight (e.g., an MMSE weight) W based on the result of the channel estimation obtained from the channel estimation unit 610 and $R_{nn}$. The weight W may be transferred to the SINR calculation unit 650 and the equalization unit 640.

The equalization unit 640 may perform equalization to compensate for distortion of a channel corresponding to the reception data $Y_{Data}$. The SINR calculation unit 650 may calculate an SINR of the reception signal Y and transmit the calculated SINR to the LLR calculation unit 660. The LLR calculation unit 660 may obtain an LLR based on the SINR. The LLR calculation unit 660 may transmit the reception data $Y_{Data}$ (or changed reception data $Y'_{Data}$) to a decoder to obtain transmission data corresponding to the reception data $Y_{Data}$ based on the LLR.

The electronic device 600 described above may be included in a base station. Hereinafter, for convenience of description, the electronic device 600 may be described as a base station.

According to an embodiment, in a case that data is transmitted in a communication system, a reception device (e.g., the base station) may allocate a resource using a time frequency resource. A transmission device (e.g., a terminal) may transmit data using the allocated time frequency resource. For example, in a case of a PUSCH, the base station may transmit a UL grant to a terminal through downlink control information (DCI). The terminal may identify PUSCH allocation information included in the DCI. The terminal may generate (or configure) a PUSCH resource based on the PUSCH allocation information and transmit information on the generated (or configured) PUSCH resource to the base station.

For example, the PUSCH resource may be allocated to one or more orthogonal frequency division multiplexing (OFDM) symbols in a time unit. The PUSCH resource may be allocated to one or more resource blocks (RBs) in a frequency unit. In addition, one RB may be configured with 12 tones in a frequency domain. One tone per symbol may be referred to as a resource element (RE). An RE resource may include a demodulation reference signal (DMRS) RE and a data RE. The RE resource may be divided into the DMRS RE and the data RE. The reception device may estimate a received PUSCH channel using the DMRS RE. The reception device may estimate (or identify) the received data RE after calculating an equalization weight using an estimated channel.

According to an embodiment, in a system that receives a signal of $N_{layer}$ from $N_{rx}$ antennas, $y(k, l)$ indicating a reception signal at a k-th tone and an l-th symbol is a vector of ($N_{rx} \times 1$) size. The reception signal $y(k, l)$ may be set (or represented) as in Equation 1.

【Equation 1】

$$y(k, l) = \mathbf{H}(k, l)\mathbf{x}(k, l) + \mathbf{n}(k, l)$$

Referring to Equation 1, x(k, l) indicates a vector having ($N_{layer} \times 1$) size transmitted in the k-th tone and the l-th symbol. **H**(k, l) indicates $[\mathbf{h}_0(k, l) \, \mathbf{h}_1(k, l) \, ... \, \mathbf{h}_{N_{layer}-1}(k, l)]$ **H**(k, l) indicates a channel matrix of ($N_{rx} \times N_{layer}$) size for the k-th tone and the l-th symbol. n(k, l) indicates an interference vector of ($N_{rx} \times 1$) size received at the *k-th* tone and *l*-th symbol. **n**(k, l) may mean noise.

According to an embodiment, a frequency equalizer may obtain (or identify) the weight W using an MMSE. The frequency equalizer may perform equalization according to the following equation.

【Equation 2】

$$\hat{\mathbf{X}}(k, l) = \mathbf{W}(k, l)^H \mathbf{y}(k, l) = \hat{\mathbf{H}}^H(k, l)\left(\hat{\mathbf{H}}(k, l)\hat{\mathbf{H}}^H(k, l) + \mathbf{R_{nn}}\right)^{-1}\mathbf{y}(k, l)$$

Referring to Equation 2, $\hat{\mathbf{x}}$(k, l) indicates the vector of ($N_{layer} \times 1$) size obtained (or estimated) through the estimated k-th tone and l-th symbol. **W**(k, l) indicates a weight (e.g., an MMSE weight). $\hat{\mathbf{H}}$(k, l) indicates a channel matrix of ($N_{rx} \times N_{layer}$) size estimated from the *k*-th tone and *l*-th symbol. **R_{nn}** indicates the covariance matrix of estimated noise and interference components of ($N_{rx} \times N_{rx}$) size.

According to Equation 2, in order to obtain a weight, inversion calculation (or inverse matrix calculation) of a ($N_{rx} \times N_{rx}$) matrix should be performed. As the number of antennas increases, complexity for calculating the weight increases. Therefore, a MMSE structure using a whitening technique is considered to reduce the complexity. In the MMSE structure using the whitening technique, the weight may be configured as in Equation 4 below. Equation 4 may be developed according to a matrix inversion lemma in Equation 2.

The matrix inversion lemma is as follows.

【Equation 3】

$$(A + BB^H)^{-1} = A^{-1} - A^{-1}B(I + B^H A^{-1}B)^{-1}B^H A^{-1}$$

【Equation 4】

$$\mathbf{W}^H(k,l)\mathbf{y}(k,l) = \hat{\mathbf{H}}^H(k,l)\big(\hat{\mathbf{H}}(k,l)\hat{\mathbf{H}}^H(k,l) + \mathbf{R_{nn}}\big)^{-1}\mathbf{y}(k,l)$$

$$= \hat{\mathbf{H}}^H(k,l)\mathbf{R_{nn}^{-1}}\mathbf{y}(k,l)$$

$$- \hat{\mathbf{H}}^H(k,l)\mathbf{R_{nn}^{-1}}\hat{\mathbf{H}}(k,l)\big(\hat{\mathbf{H}}^H(k,l)\mathbf{R_{nn}^{-1}}\hat{\mathbf{H}}(k,l) + \mathbf{I}\big)^{-1}\hat{\mathbf{H}}^H(k,l)\mathbf{R_{nn}^{-1}}\mathbf{y}(k,l)$$

$$= \big(\hat{\mathbf{H}}^H(k,l)\mathbf{R_{nn}^{-1}}\hat{\mathbf{H}}(k,l) + \mathbf{I}\big)^{-1}\hat{\mathbf{H}}^H(k,l)\mathbf{R_{nn}^{-1}}\mathbf{y}(k,l)$$

Referring to Equation 4, $\mathbf{I}$ is an identity matrix of ($N_{layer} \times N_{layer}$) size. In order to obtain a weight, inversion calculation of a ($N_{layer} \times N_{layer}$) matrix is required. However, $\mathbf{R_{nn}^{-1}}$ , which is an inverse matrix of the covariance matrix of the noise and interference components, may be calculated using $\mathbf{R_{nn}}$ in a specific resource area. In addition, $\mathbf{R_{nn}^{-1}}$ , which is the inverse matrix of the covariance matrix of the noise and interference components, may be commonly used when calculating a weight (e.g., an MMSE weight) of the specific resource area.

Efforts have been made to meet the demand for wireless data traffic in developing a 5G communication system as well as a 4th generation (4G) communication system. In order to achieve a high data transmission rate, massive MIMO and/or Full Dimensional MIMO (FD-MIMO) technologies have been developed in the 5G communication system, and the number of antennas and transmitted layers in a communication system is also increasing to support this function. In a case that the number of reception antennas and the number of layers increases, calculation complexity of the weight W (e.g., the MMSE weight) may increase according to Equations 2 and 4. Accordingly, it may be impossible to calculate $\mathbf{W}(k, l)$ of all data REs.

In the following specification, in a case of calculating the weights described above, a technical feature for obtaining weights of all data REs may be described by calculating a weight based on sparsity (or a sparse weight) to reduce complexity and performing interpolation based on the weight based on the sparsity. By performing the interpolation based on the weight based on the sparsity, complexity of the electronic device may be reduced as the weights of all data REs are obtained.

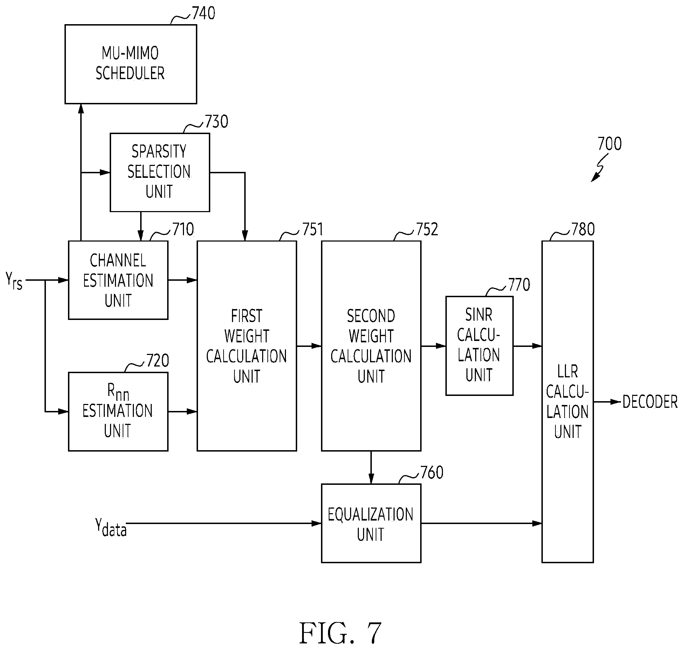

FIG. 7 illustrates an example of functional blocks for performing equalization using a weight based on sparsity. The functional blocks may correspond to operations of one or more network entities (e.g., a base station 110, a DU 210, and an RU 220). Hereinafter, a network entity that performs operations corresponding to the functional blocks is described as including an electronic device 700, but the operations may, of course, be performed by a plurality of network entities (e.g., the DU 210 and the RU 220). Hereinafter, the terms '...unit', '...device', and the like used hereinafter mean a unit that processes at least one function or operation, which may be implemented by hardware or software, or a combination of the hardware and the software.

An electronic device 700 may include a channel estimation unit 710, an Rnn estimation unit 720, a sparsity selection unit 730, a multiple user- multiple input multiple output (MU-MIMO) scheduler 740, a first weight calculation unit 751, a second weight calculation unit 752, an equalization unit 760, an SINR calculation unit 770, and an LLR calculation unit 780.

The first weight calculation unit 751 may be used to calculate some of weights for all data REs. For example, the first weight calculation unit 751 may be referred to as a sparse weight calculation unit. The second weight calculation unit 752 may be used to calculate remaining weights excluding the weights calculated by the first weight calculation unit 751. For example, the second weight calculation unit 752 may be referred to as a remaining weight calculation unit.

Weights for all data REs may be calculated (or identified) through the first weight calculation unit 751 and the second weight calculation unit 752. After the weights for all data REs are calculated (or identified), equalization may be performed. Thereafter, after an SINR (e.g., a post SINR) value is calculated (or identified), an LLR value may be calculated (or obtained). The calculated (or obtained) LLR value may be transmitted to a decoder.

When a received reception signal of a time domain is y, a reception signal of a frequency domain may be represented as Y. A reception signal may include reception reference signals (e.g., DMRSs) and reception data (e.g., a PUSCH signal) for channel estimation and demodulation. The reception reference signals may be represented as $Y_{rs}$. For example, $Y_{rs}$ may mean a reception signal at an RE in which a reference signal is positioned. The reception data may be represented as $Y_{data}$. For example, $Y_{data}$ may mean a reception signal for data RE.

According to an embodiment, the channel estimation unit 710 may estimate a channel value of the data RE in which $Y_{data}$ is received using $Y_{rs}$. The sparsity selection unit 730 may select (or determine) sparsity based on a predefined rule. The sparsity selection unit 730 may transmit sparsity information to the channel estimation unit 710 and the first weight calculation unit 751.

The channel estimation unit 710 may not estimate channel values for all data REs, but may only estimate a channel value for a sparse RE position selected (or determined) by the sparsity selection unit 730.

The $R_{nn}$ estimation unit 620 may calculate $R_{nn}$ based on the reception reference signals (e.g., actual received DMRSs) $Y_{rs}$ and a predetermined sequence (e.g., a DMRS sequence of LTE or NR standard). $R_{nn}$ is a covariance matrix of noise and interference components.

For example, the $R_{nn}$ estimation unit 620 may estimate the covariance matrix (or a noise covariance matrix) of the noise and interference components at the sparse RE position based on the estimated channel value. The first weight calculation unit 751 may calculate (or identify) a weight only at the sparse RE position. When the weight is calculated (or identified) in the sparse RE, the second weight calculation unit 752 may perform calculation for identifying the weights for all data REs.

According to an embodiment, the MU-MIMO scheduler 740 may perform MU-pairing by grouping terminals based on a specified condition. A specific example of the MU-MIMO scheduler 740 performing MU-pairing will be described later.

According to an embodiment, a weight W may be transferred to the equalization unit 760 and the SINR calculation unit 770. The equalization unit 760 may perform equalization to compensate for distortion of a channel corresponding to the reception data $Y_{Data}$. The SINR calculation unit 770 may calculate an SINR of the reception signal Y and transmit the calculated SINR to the LLR calculation unit 780. The LLR calculation unit 780 may obtain (or calculate) an LLR. The LLR calculation unit 780 may transmit the reception data $Y_{Data}$ (or changed reception data $Y'_{Data}$) to a decoder to obtain transmission data corresponding to the reception data $Y_{Data}$ based on the SINR and the LLR.

In the following specification, a technical feature for calculating the weight at the sparse RE position described above in the electronic device 700 and, accordingly, identifying the weights for all data REs may be described.

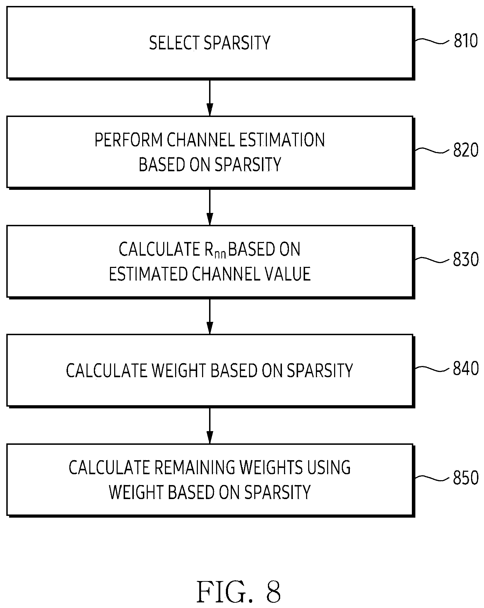

FIG. 8 illustrates a flowchart related to an operation for calculating a weight based on sparsity. Operations illustrated in FIG. 8 may be performed by the electronic device 700 of FIG. 7.

Referring to FIG. 8, in an operation 810, the electronic device 700 (e.g., a processor of the electronic device 700) may select sparsity. For example, the electronic device 700 may select the sparsity using a sparsity selection unit 730. The electronic device 700 may transfer (or transmit) information on the selected sparsity to a channel estimation unit 710.

In an operation 820, the electronic device 700 (e.g., the processor of the electronic device 700) may perform channel estimation based on the sparsity. For example, the electronic device 700 may perform the channel estimation based on information on the sparsity received from the sparsity selection unit 730 using the channel estimation unit 710. For example, the electronic device 700 may estimate a channel for an RE identified according to the sparsity. The electronic device 700 may estimate (or identify) a channel value based on performing the channel estimation.

In an operation 830, the electronic device 700 (e.g., the processor of the electronic device 700) may calculate $R_{nn}$ based on the estimated channel value. For example, the electronic device 700 may calculate the $R_{nn}$ based on the estimated channel value using an $R_{nn}$ estimation unit 720.

In an operation 840, the electronic device 700 (e.g., the processor of the electronic device 700) may calculate a weight based on the sparsity. For example, the electronic device 700 may calculate the weight based on the sparsity using a first weight calculation unit 751 through the $R_{nn}$ and a sparsely calculated channel value.

In an operation 850, the electronic device 700 (e.g., the processor of the electronic device 700) may calculate remaining weights using the weight based on the sparsity. For example, the electronic device 700 may calculate weights for remaining data REs, for which a weight has not been calculated among all data REs, using a second weight calculation unit 752.

Hereinafter, a technical feature for selecting sparsity according to the operation 810 of FIG. 8 will be described.

According to an embodiment, an RE in which a weight is calculated may be selected based on a frequency. For example, the sparsity selection unit 730 may select frequency sparsity. The frequency sparsity selected by the sparsity selection unit 730 may be applied as the same value in an allocated RB. For example, in the allocated RB, at least one of [1, 2, 3, 4, 6, 12] may be selected as the frequency sparsity. As an example, in a case that the frequency sparsity is selected (or set) to '1', weights may be calculated in all REs. In a case that the frequency sparsity is selected (or set) to '2', weights may be calculated in one RE per 2 tones. In a case that the frequency sparsity is selected (or set) to '3', weights may be calculated in one RE per 3 tones. In a case that the frequency sparsity is selected (or set) to '12', a weight may be calculated in one RE in one RB.

According to an embodiment, a symbol in which a weight is calculated may be selected based on time. For example, the sparsity selection unit 730 may select time sparsity. The time sparsity may be selected as one of various values. For example, since the maximum number of symbols in an NR PDSCH and a PUSCH is 14, the time sparsity may be represented as the number of symbols that should be actually calculated. As an example, in a total of 14 symbols, the time sparsity may be selected as one of [1 2 3 4 6 14]. Therefore, the number of symbols to be calculated may be selected as one of [14, 6, 4, 3, 2, 1]. The number of symbols to be calculated may be referenced as a 'time_num_sym' parameter.

According to the above-described embodiments, the frequency sparsity and the time sparsity may be selected according to the following options (or criteria).

Option 1) Sparsity (e.g., the frequency sparsity and/or the time sparsity) may be selected based on numerology. For example, when a symbol duration is short, the sparsity may be set higher. In other words, the shorter the symbol duration, the fewer REs may be used for weight calculation.

Option 2) Based on a modulation coding scheme (MCS) (or modulation order), the sparsity (e.g., the frequency sparsity and/or the time sparsity) may be selected. Different sparsity may be selected for each MCS. For example, when the MCS is high, the sparsity may be set to be lower. In other words, the higher the MCS, the more REs may be used for weight calculation.

Option 3) Based on the number of reception antennas and/or the number of layers, the sparsity (e.g., the frequency sparsity and/or the time sparsity) may be selected. For example, when the number of layers is large, the sparsity may be set to be low. In other words, the more the number of layers, the more REs may be used for weight calculation.

Option 4) The sparsity (e.g., the frequency sparsity and/or the time sparsity) may be selected based on a value for channel selectivity and/or a doppler effect.

The four options described above do not limit a sparsity selection method, and the sparsity may be selected based on at least one or all of the four options.

In the option 4 described above, a value according to the channel selectivity and/or the doppler effect may be measured in various methods. Hereinafter, an example of estimating the value according to the channel selectivity and/or the doppler effect will be described.

According to an embodiment, the channel selectivity may be measured (or identified) based on a frequency domain channel value and a time domain channel value.

For example, the channel selectivity may be set (or determined) based on the frequency domain channel value. The channel selectivity may be set (or determined) based on a channel value in which a distance between tones in a DMRS symbol is different by d. In a case that an antenna index is n and a layer index is m, a channel value estimated at a k-th tone is $\hat{H}_{n,m}(k)$, and a channel value estimated at the k+d-th tone is $\hat{H}_{n,m}(k + d)$. For example, a reference value for setting the channel selectivity based on $\hat{H}_{n,m}(k)$ and $\hat{H}_{n,m}(k+ d)$ may be set.

For example, the electronic device 700 may determine whether the channel selectivity is large or small according to at least one of a first reference value and a second reference value below. According to at least one of the first reference value and the second reference value, whether the channel selectivity is large or small may be determined.

As an example, the first reference value may be set based on a size change amount of a channel value in two tones in which a distance between tones is different by d. The first reference value may be set to variance of $|\hat{H}_{n,m}(k + d)/\hat{H}_{n,m}(k)|$.

As an example, the second reference value may be set based on an average Euclidean distance value of an estimated channel value between two tones in a channel value that has been time offset compensated. The second reference value may be set to an average of an Euclidean distance value D. The second reference value may be set to an average value of D. D may be set as in Equation 5.

【Equation 5】

$$D = \sqrt{\left(\hat{H}_{n,m}(k).r - \hat{H}_{n,m}(k + d)exp\left(j\theta_{m,n}^{TO} \cdot d\right).r\right)^2 + \left(\hat{H}_{n,m}(k).i - \hat{H}_{n,m}(k + d)exp\left(j\theta_{m,n}^{TO} \cdot d\right).i\right)^2}$$

In Equation 5, r means a real value, and i means an imaginary value.

For example, the channel selectivity may be set (or determined) based on the time domain channel value. IDFT calculation may be performed on a frequency axis channel value of an allocated area. A specific threshold value may be applied to estimate a channel impulse response (CIR). As an example, a receiver may identify only a value greater than or equal to a noise threshold value as a signal. The reference value for setting the channel selectivity may be set based on a calculated CIR.

For example, the electronic device 700 may determine whether the channel selectivity is large or small according to at least one of a third reference value and a fourth reference value below. According to at least one of the third reference value and the fourth reference value, whether the channel selectivity is large or small may be determined.

As an example, the third reference value may be set to a root mean square delay spread (RMS DS). The electronic device 700 may estimate the CIR by applying a specified threshold value and obtain (or identify) the RMS DS. The electronic device 700 may determine whether the channel selectivity is large or small based on the RMS DS which is the third reference value. The electronic device 700 may measure the channel selectivity based on the RMS DS, which is the third reference value.

As an example, the fourth reference value may be set as a distance difference between a first tap and a last tap of the CIR. The electronic device 700 may estimate the channel selectivity based on the distance difference between the first tab and the last tab of the CIR.

According to an embodiment, in a case of calculating a reference value (e.g., the first reference value to the fourth reference value) for measuring the channel selectivity, the electronic device 700 may calculate (or identify) the reference value only in an antenna in which a DMRS SNR is the best, when the number of antennas is plural. According to an embodiment, the electronic device 700 may calculate (or identify) a reference value (e.g., the first reference value to the fourth reference value) for two or more antennas, and then set an average of the identified two reference values as a reference value for measuring the channel selectivity. On the other hand, when the number of layers is plural, channel selectivity determination for each layer should be performed, and frequency sparsity may be selected based on a layer with large channel selectivity.

According to an embodiment, in a case that there are two or more DMRS symbols, a value for the doppler effect may be estimated (or identified) by comparing correlation of power of the two DMRS symbols. In a case that the antenna index is n and the layer index is m, a position of a first DMRS symbol is $l_0$, when a position of a second DMRS symbol is $l_1$, channel values estimated at the k-th tone of each symbol are $\hat{H}_{n,m,l_0}(k)$ and $\hat{H}_{n,m,l_1}(k)$, respectively.

Hereinafter, equations for obtaining the value for the doppler effect may be described. For example, $RS\_POW_{n,m}$ indicating power of an RS symbol may be set as in Equation 6.

【Equation 6】

$$RS\_POW_{n,m} = \Sigma_{0 \leq k < 12N_{RB}} \frac{\left|\hat{H}_{n,m,l_0}(k)\right|^2 + \left|\hat{H}_{n,m,l_1}(k)\right|^2}{2}$$

$\theta_{n,m}^{FO}$ indicating a phase difference related to a frequency offset may be set as in Equation 7.

【Equation 7】

$$\theta_{n,m}^{FO} = \frac{1}{l_1 - l_0} \angle \left[ \Sigma_{0 \leq k < 12N_{RB}} \left\{ \hat{H}_{n,m,l_1}(k) \mathrm{conj}\left(\hat{H}_{n,m,l_0}(k)\right) \right\} \right]$$

$FO\_comp\_correl_{n,m}$, which is a value related to correlation according to compensation of the frequency offset, may be set as in Equation 8.

【Equation 8】

$$FO\_comp\_correl_{n,m} = exp\left(-j(l_1 - l_0)\theta_{r,p}^{FO}\right) \Sigma_{0 \leq k < 12N_{RB}} \left\{ \hat{H}_{n,m,l_1}(k) \mathrm{conj}\left(\hat{H}_{n,m,l_0}(k)\right) \right\}$$

$DOP_{n,m}$, which is the value for the doppler effect according to $FO\_comp\_correl_{n,m}$ and $RS\_POW_{n,m}$, may be set as in Equation 9.

【Equation 9】

$$DOP_{n,m} = \frac{RS\_POW_{n,m}}{FO\_comp\_corr_{n,m}}$$

$Rx\_combined\_DOP_m$, which is a value for the doppler effect in all antennas, may be set as in Equation 10.

【Equation 10】

$$Rx\_combined\_DOP_m = \frac{\Sigma_n RS\_POW_{n,m}}{\Sigma_n FO\_comp\_corr_{n,m}}$$

According to an embodiment, in a case of estimating the value for the doppler effect, the electronic device 700 may calculate (or identify) the value for the doppler effect only in the antenna in which a DMRS SNR is the best, when the number of antennas is plural. According to an embodiment, the value for the doppler effect may be estimated based on an Rx_combined_DOP value considering all antennas. On the other hand, when the number of layers is plural, determination on the doppler effect for each layer should be performed, and time sparsity may be selected based on a layer with a large value for the doppler effect.

According to an embodiment, in MU-MIMO, a difference between the value for the doppler effect and the channel selectivity, for each UE, may be large. Therefore, a MU-MIMO scheduler 740 of the electronic device 700 may perform efficient scheduling by using sparsity. An existing scheduler performs resource allocation using an SNR measured for each UE and buffer status report (BSR) information reported by a UE. On the other hand, the MU-MIMO scheduler 740 using the sparsity may obtain information on the sparsity and use the information on the sparsity for MU-MIMO scheduling. The information on the sparsity may include a value for the sparsity calculated for each UE. The information on the sparsity may include a value for the doppler effect and/or a value for the channel selectivity.

For example, in a case of reporting a value for sparsity for each UE, a value for the sparsity may be reported based on a layer with a lower value for the sparsity in single user- multiple input multiple output (SU-MIMO). For example, in the case of reporting the value for sparsity for each UE, the value for the sparsity may be reported based on a layer with a high DMRS in the single user- multiple input multiple output (SU-MIMO).

According to an embodiment, the MU-MIMO scheduler 740 may apply the received information on the sparsity to MU-MIMO scheduling in the following method. According to the following method (e.g., option 1 and/or option 2), receiver complexity may be reduced and performance loss may be minimized.

Option 1) The MU-MIMO scheduler 740 may perform MU-pairing by grouping UEs having similar values for the sparsity.

Option 2) The MU-MIMO scheduler 740 may exclude UEs having small values for the sparsity from an MU-pairing group greater than or equal to a specific layer.

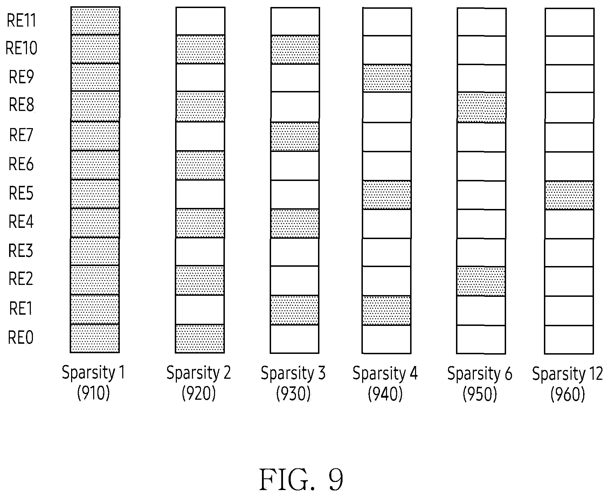

FIG. 9 indicates a position of a sparse RE set according to frequency sparsity.

Referring to FIG. 9, a position of a sparse RE (or REs) may be determined according to sparsity (e.g., frequency sparsity). "sparse_tone_index" indicating a position of a selected sparse RE is displayed as shaded in an RB. The sparse REs may be selected at the same interval based on the sparsity. Channel estimation may be performed based on the selected sparse RE (or REs).

For example, in a case 910, in a case that the frequency sparsity (or a value for the frequency sparsity) is one, all REs may be selected. In a case 920, in a case that the frequency sparsity is two, one RE per two REs may be selected. In a case 930, in a case that the frequency sparsity is three, one RE per three REs may be selected. In a case 940, in a case that the frequency sparsity is four, one RE per four REs may be selected. In a case 950, in a case that the frequency sparsity is six, one RE per six REs may be selected. In a case 960, in a case that the frequency sparsity is twelve, one RE per twelve REs may be selected.

According to an embodiment, when the frequency sparsity is even, the position of the sparse RE may be determined with an asymmetric structure. In this case, an RE shifted by one RE may be selected. For example, in the case 960, RE 5 is illustrated as being selected, but RE 6 may be selected according to an embodiment.

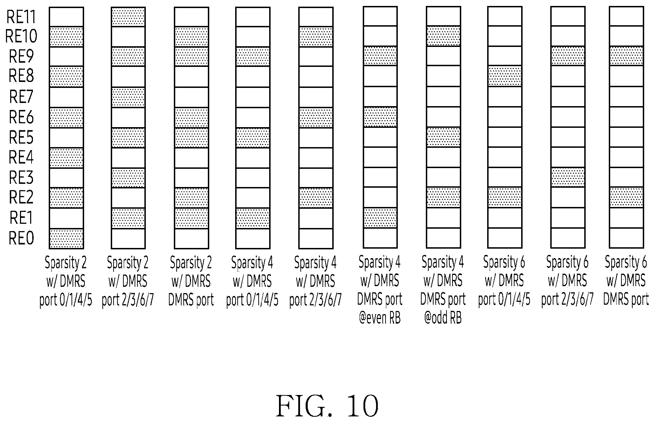

FIG. 10 indicates a position of a sparse RE set according to a DMRS port and frequency sparsity.

Referring to FIG. 10, an electronic device 700 (or a processor of the electronic device 700) may select an RE index so that a DMRS RE of UEs included in another code-division multiplexing (CDM) group is evenly included in consideration of an actual allocated DMRS RE position. For example, in an NR PUSCH DMRS configuration type 1, in a case of DMRS ports 0/1/4/5, a DMRS may be mapped to an RE of an even index, and an RE of an odd index may be empty. For another example, in the NR PUSCH DMRS configuration type 1, in a case of DMRS ports 2/3/6/7, the DMRS may be mapped to the RE of the odd index, and the RE of the even index may be empty.

"sparse_tone_index" indicating a position of a selected sparse RE is displayed as shaded in an RB. Sparse REs may be selected at the same interval based on the sparsity.

For example, in a case of sparsity 2 using the DMRS ports 0/1/4/5, the RE of the even index may be selected. In a case of sparsity 2 using the DMRS ports 2/3/6/7, the RE of the odd index may be selected. In a case that both the RE of the even index and the RE of the odd index are used, such as DMRS ports 0/2, an RE may be selected to include both the RE of the even index and the RE of the odd index, such as a mixed DMRS port. As an example, in a case of Sparsity 4, as channel estimation should be performed for 3 REs per RB, a position of an RE selected for each RB in a mixed DMRS port environment may be set differently.

Hereinafter, an example in which a position of a sparse symbol is set based on time sparsity may be described.

According to an embodiment, "sparse_sym_index" indicating the position of the sparse symbol determined according to the time sparsity may be set based on a position of specified DMRS symbols and the number of symbols of an entire channel. For example, in a case of NR PUSCH, the various numbers of DMRS symbols may be supported as in the following table. In addition, a position of a DMRS symbol may be changed according to a length of a PUSCH symbol.

[Table 3]

| $l_d$ in symbols | DM-RS positions $\bar{l}$ | | | | | | | |
| --- | --- | --- | --- | --- | --- | --- | --- | --- |
| | PUSCH mapping type A | | | | PUSCH mapping type B | | | |
| | *dmrs-AdditionalPosition* | | | | *dmrs-AdditionalPosition* | | | |
| | *pos0* | *pos1* | *pos2* | *pos3* | *pos0* | *pos1* | *pos2* | *pos3* |
| <4 | - | - | - | - | $l_0$ | $l_0$ | $l_0$ | $l_0$ |
| 4 | $l_0$ | $l_0$ | $l_0$ | $l_0$ | $l_0$ | $l_0$ | $l_0$ | $l_0$ |
| 5 | $l_0$ | $l_0$ | $l_0$ | $l_0$ | $l_0$ | $l_0, 4$ | $l_0, 4$ | $l_0, 4$ |
| 6 | $l_0$ | $l_0$ | $l_0$ | $l_0$ | $l_0$ | $l_0, 4$ | $l_0, 4$ | $l_0, 4$ |
| 7 | $l_0$ | $l_0$ | $l_0$ | $l_0$ | $l_0$ | $l_0, 4$ | $l_0, 4$ | $l_0, 4$ |
| 8 | $l_0$ | $l_0, 7$ | $l_0, 7$ | $l_0, 7$ | $l_0$ | $l_0, 6$ | $l_0, 3, 6$ | $l_0, 3, 6$ |
| 9 | $l_0$ | $l_0, 7$ | $l_0, 7$ | $l_0, 7$ | $l_0$ | $l_0, 6$ | $l_0, 3, 6$ | $l_0, 3, 6$ |
| 10 | $l_0$ | $l_0, 9$ | $l_0, 6, 9$ | $l_0, 6, 9$ | $l_0$ | $l_0, 8$ | $l_0, 4, 8$ | $l_0, 3, 6, 9$ |
| 11 | $l_0$ | $l_0, 9$ | $l_0, 6, 9$ | $l_0, 6, 9$ | $l_0$ | $l_0, 8$ | $l_0, 4, 8$ | $l_0, 3, 6, 9$ |
| 12 | $l_0$ | $l_0, 9$ | $l_0, 6, 9$ | $l_0, 5, 8, 11$ | $l_0$ | $l_0, 10$ | $l_0, 5, 10$ | $l_0, 3, 6, 9$ |
| 13 | $l_0$ | $l_0, 11$ | $l_0, 7, 11$ | $l_0, 5, 8, 11$ | $l_0$ | $l_0, 10$ | $l_0, 5, 10$ | $l_0, 3, 6, 9$ |
| 14 | $l_0$ | $l_0, 11$ | $l_0, 7, 11$ | $l_0, 5, 8, 11$ | $l_0$ | $l_0, 10$ | $l_0, 5, 10$ | $l_0, 3, 6, 9$ |

Referring to Table 3, $\bar{l}$ means positions of DMRSs in a PUSCH. According to a PUSCH mapping type A and a PUSCH mapping type B, a position of a DMRS may be set in a slot configured with one symbol.

For example, in order to reduce calculation complexity, " -sparse_sym_index" indicating a position of a sparse symbol determined by time sparsity may be set (or selected) based on the following rules.

1) In a case that the number of DMRS symbols is one, a 'time_num_sym' parameter may be set to '1'. In this case, a 'sparse_sym_index' parameter may be set to $\{l_0\}$.

2)-i. In a case that the number of DMRS symbols is two or more, the 'time_num_sym' parameter may be set to '1'. In this case, the 'sparse_sym_index' parameter may be set to $\{l_0\}$.

2)-ii. In a case that the number of DMRS symbols is two or more, the 'time_num_sym' parameter may be set to '2'. In this case, the 'sparse_sym_index' parameter may be set to {pos1}.

2)-iii. In a case that the number of DMRS symbols is two or more, the 'time_num_sym' parameter may be set to '3'. In this case, the 'sparse_sym_index' parameter may be set to {pos2}. For example, in a case that the number of DMRSs of 'pos2' is two, the 'sparse_sym_index' parameter may be set to {pos1, $addsym_0$}. For example, in a case that the number of DMRSs of 'pos2' is one, the 'sparse_sym_index' parameter may be set to {pos1, $addsym_0$, $addsym_1$}.

2)-iv. In a case that the number of DMRS symbols is two or more, the 'time_num_sym' parameter may be set to '4'. In this case, the 'sparse_sym_index' parameter may be set to {start, pos1, end}. For example, in a case that pos1 includes a start symbol, the 'sparse_sym_index' parameter may be set to {pos1, end, $addsym_0$}. For example, in a case that pos1 includes an end symbol, the 'sparse_sym_index' parameter may be set to {start, pos1, $addsym_0$}.

2)-v. In a case that the number of DMRS symbols is two or more, the 'time_num_sym' parameter may be set to '6'. In this case, the 'sparse_sym_index' parameter may be set to {start, pos1, end, $addsym_0$, $addsym_1$}. For example, in a case that pos1 includes the start symbol, the 'sparse_sym_index' parameter may be set to {pos1, end, $addsym_0$, $addsym_1$, $addsym_2$}. For example, in a case that pos1 includes the end symbol, the 'sparse_sym_index' parameter may be set to {start, pos1, $addsym_0$, $addsym_1$, $addsym_2$}.

In the above-described rules, $addsym_x$ may be selected as a position capable of avoiding a selected position of symbols and maintaining the same interval. In addition, if the total number of symbols is less than twice the 'time_num_sym' parameter, channel estimation (or weight calculation) may be performed for all symbols.

According to the above-described rules, in a single symbol DMRS mapping type A, the 'sparse_sym_index' parameter may be set as in Table 4. According to the above-described rules, in a single symbol DMRS mapping type B, the 'sparse_sym_index' parameter may be set as in Table 5.

[Table 4]

| | | | | | | |
|---|---|---|---|---|---|---|
| sparse_sym_index for single symbol DMRS mapping type A | | | | | | |
| $I_d$ | Time_num_sym | | | | | |
| | 1 | 2 | 3 | 4 | 6 | Every |
| <4 | N/A | | | | | |
| 4 | L0 | N/A | | | | |
| 5 | L0 | | | | | |
| 6 | L0 | | | | | |
| 7 | L0 | | | | | |
| 8 | L0 | L0, 7 | L0, 5, 7 | 0, L0, 5, 7 | Every | Every |
| 9 | L0 | L0, 7 | L0, 5, 7 | 0, L0, 7, 8 | Every | Every |
| 10 | L0 | L0, 9 | L0, 6, 9 | 0, L0, 6, 9 | Every | Every |
| 11 | L0 | L0, 9 | L0, 6, 9 | 0, L0, 9, 10 | Every | Every |
| 12 | L0 | L0, 9 | L0, 6, 9 | 0, L0, 9, 11 | 0, L0, 4, 6, 9, 11 | Every |
| 13 | L0 | L0, 11 | L0, 7, 11 | 0, L0, 11, 12 | 0, L0, 5, 7, 11, 12 | Every |
| 14 | L0 | L0, 11 | L0, 7, 11 | 0, L0, 11, 13 | 0, L0, 5, 7, 11, 13 | Every |

[Table 5]

| | | | | | | |
|---|---|---|---|---|---|---|
| sparse_sym_index for single symbol DMRS mapping type B | | | | | | |
| $I_d$ | Time_num_sym | | | | | |
| | 1 | 2 | 3 | 4 | 6 | Every |
| <4 | L0 | N/A | | | | |
| 4 | L0 | | | | | |
| 5 | L0 | L0, 4 | Every | Every | Every | Every |
| 6 | L0 | L0, 4 | L0, 2, 4 | Every | Every | Every |
| 7 | L0 | L0, 4 | L0, 2, 4 | Every | Every | Every |
| 8 | L0 | L0, 6 | L0, 3, 6 | L0, 3, 6, 7 | Every | Every |
| 9 | L0 | L0, 6 | L0, 3, 6 | L0, 3, 6, 8 | Every | Every |
| 10 | L0 | L0, 8 | L0, 4, 8 | L0, 4, 8, 9 | Every | Every |
| 11 | L0 | L0, 8 | L0, 4, 8 | L0, 4, 8, 10 | Every | Every |
| 12 | L0 | L0, 10 | L0, 5, 10 | L0, 5, 10, 11 | L0, 2, 5, 7, 10,11 | Every |
| 13 | L0 | L0, 10 | L0, 5, 10 | L0, 5, 10, 12 | L0, 2, 5, 7, 10, 12 | Every |
| 14 | L0 | L0, 10 | L0, 5, 10 | L0, 5, 10, 13 | L0, 2, 5, 7, 10, 13 | Every |

Referring to Tables 4 and 5, 'every' may mean that, for all symbols, channel estimation is performed, and a weight is calculated. For example, in Table 4, L0 may be set to 2. For example, in Table 5, L0 may be set to 0. A value of L0 is exemplary and may be changed. Table 4 and Table 5 indicates an example of the 'sparse_sym_index' parameter in a single symbol DMRS case. Similarly, the above-described rules may be applied in a double symbol DMRS case. However, dmrs-additionalPosition pos0 may be set (or considered) to a first DMRS symbol, and pos1 may be set (or considered) to a second DMRS symbol, and accordingly, sparse_sym_index may be set (or calculated).

Additionally, as in Table 4 and Table 5, when a value of a DMRS symbol position is included in the spare_sym_index, complexity may be reduced when calculating time domain channel estimation (TDCE) for a data symbol after frequency domain channel estimation (FDCE) at the DMRS symbol position. For example, there is no need for a channel value of a data symbol to additionally calculate a weight in the following TDCE bypass condition. Therefore, the electronic device 700 (or the processor of the electronic device 700) may perform only frequency domain channel estimation in a reference signal symbol (RS symbol) and bypass the time domain channel estimation.

For example, the TDCD bypass condition is as follows.

1) time_num_sym = 1
2) time_num_sym = 2
3) time_num_sym = 3 and number of DMRS symbols = 3

According to an embodiment, when sparsity is determined in a sparsity selection unit 730 of the electronic device 700, a channel estimation unit 710 may perform channel estimation at the position of the sparse RE. The channel estimation unit 710 may transmit (or transfer) an estimated channel value to an $R_{nn}$ estimation unit and a first weight calculation unit 751. A value for sparsity used by the channel estimation unit 710 may be distinguished from a value for sparsity used by the first weight calculation unit 751.

For example, the value for the sparsity used by the first weight calculation unit 751 may be greater than the value for the sparsity used by the channel estimation unit 710. When a channel value estimated by the channel estimation unit 710 is in a resource to be used by the first weight calculation unit 751, a weight (or a sparse weight) calculation based on the sparsity may be performed without a problem. As an example, the electronic device 700 (or the processor of the electronic device 700) may set (or use) a 'time_num_sym' parameter as '2' in the channel estimation unit 710 and the first weight calculation unit 751 equally. The electronic device 700 (or the processor of the electronic device 700) may set (or use) frequency sparsity to '1' in the channel estimation unit 710, and set (or use) the frequency sparsity to '3' in the first weight calculation unit 751.

In addition, an $R_{nn}$ estimation unit 720 may perform $R_{nn}$ calculation only on the sparse RE by considering the frequency sparsity. As the $R_{nn}$ calculation is performed only on the sparse RE, complexity related to $R_{nn}$ matrix estimation may be reduced. The $R_{nn}$ estimation unit 720 may identify (or calculate) a noise covariance matrix $\mathbf{R_{nn}}$ and an inverse matrix $\mathbf{R_{nn}^{-1}}$ of the noise covariance matrix based on the estimated channel value. The $R_{nn}$ estimation unit 720 may transmit (or transfer) the noise covariance matrix $\mathbf{R_{nn}}$ and the inverse matrix $\mathbf{R_{nn}^{-1}}$ of the noise covariance matrix to the first weight calculation unit 751.

According to an embodiment, an estimated channel value for a k-th tone and an l-th symbol may be represented as $\hat{H}(k, l)$. The first weight calculation unit 751 may identify (or calculate) a weight in an MMSE structure in which a whitening technique is used as in Equation 4 described above. At this time, the first weight calculation unit may not identify (or calculate) weights for all tones (e.g., k) and all symbols (e.g., l), but may identify (or calculate) a weight only at a position of a tone and a symbol selected by the sparsity selection unit 730.

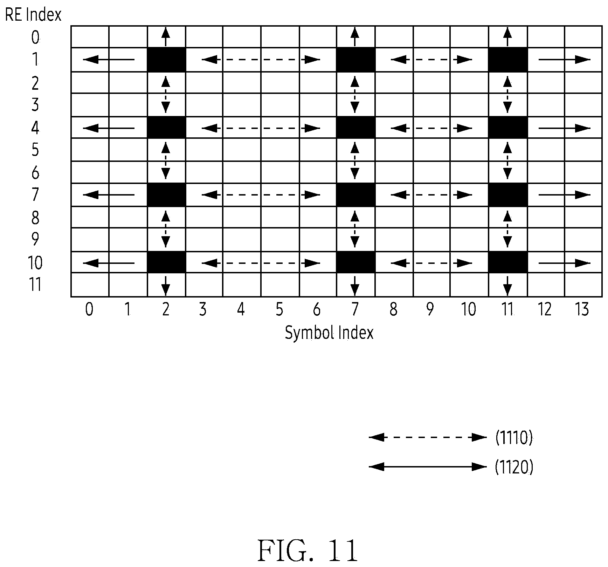

Finally, a second weight calculation unit 752 may identify (or calculate) weights for all remaining data REs. For example, the second weight calculation unit 752 may identify (or calculate) the weights for all remaining data REs using one of linear interpolation and/or copy mode. An example of a specific operation of identifying (or calculating) the weights for all remaining data REs using the linear interpolation and/or the copy mode will be described later in FIG. 11.

FIG. 11 illustrates an example of an operation of a receiver for identifying a weight for all remaining data REs.

Referring to FIG. 11, in a case that frequency sparsity is '3' and a 'time_num_sym' parameter is '3', sparse REs may be displayed as shaded. For example, in a case that a symbol index is '2', RE indices of the sparse REs may be set to 1, 4, 7, and 10. A weight may be identified (or calculated) in the sparse REs.

For example, in order to identify the weight, interpolation may be performed in an area indicated by a dotted arrow 1110. In order to identify the weight, weight copy or extrapolation may be performed in an area indicated by a solid arrow 1120.

As an example, in a case that a symbol index is '2', interpolation may be performed in REs in which RE indices are 2, 3, 5, 6, 8, and 9. In a frequency domain, weight interpolation may be set as in the following equations. In the following equations, $W^H(a,b)$ may indicate a weight for an RE in which an RE index is a and a symbol index is b.

【Equation 11】

$$W^H(2,2) = \frac{1}{3} W^H(1,2) + \frac{2}{3} W^H(4,2)$$

【Equation 12】

$$W^H(3,2) = \frac{2}{3}W^H(1,2) + \frac{1}{3}W^H(4,2)$$

【Equation 13】

$$W^H(5,2) = \frac{1}{3}W^H(4,2) + \frac{2}{3}W^H(7,2)$$

【Equation 14】

$$W^H(6,2) = \frac{2}{3}W^H(4,2) + \frac{1}{3}W^H(7,2)$$

【Equation 15】

$$W^H(8,2) = \frac{1}{3}W^H(7,2) + \frac{2}{3}W^H(10,2)$$

【Equation 16】

$$W^H(9,2) = \frac{2}{3}W^H(7,2) + \frac{1}{3}W^H(10,2)$$

Weights of Equations 11 to 16 described above are identified according to frequency interpolation, and similarly, weights for all remaining REs may be identified according to time interpolation.

As an example, when the symbol index is '2', in REs in which RE indices are 0 and 11 positioned at an edge, the weight copy or extrapolation according to a copy mode may be performed.

Weights identified (or obtained) according to the weight copy in the frequency domain may be set as in the following equations. In the following equations, $W^H(a,b)$ may indicate the weight for the RE in which the RE index is a and the symbol index is b.

【Equation 17】

$$W^H(0,2) = W^H(1,2)$$

【Equation 18】

$$W^H(11,2) = W^H(10,2)$$

Weights identified (or obtained) according to the weight extrapolation in the frequency domain may be set as in the following equations.

【Equation 19】

$$W^H(0,2) = \frac{4}{3}W^H(1,2) - \frac{1}{3}W^H(4,2)$$

【Equation 20】

$$W^H(11,2) = -\frac{1}{3}W^H(7,2) + \frac{4}{3}W^H(10,2)$$

The above-described examples have been described based on a case of 1 RB (or 12 RE), but are not limited thereto. In a case that a plurality of RBs are allocated, interpolation between RBs may also be performed. For example, an electronic device 700 may perform interpolation even at a boundary between RBs. At this time, the electronic device 700 may perform copying and/or extrapolation at an edge of an allocated RB area. The electronic device 700 may perform copying and/or extrapolation to identify a weight at the edge of the allocated RB area.

According to an embodiment, in addition to the above-described embodiments, in a case that a time offset and a frequency offset are estimated in an OFDM system, frequency domain interpolation may be performed on a weight for which the time offset is compensated. In addition, in a case that the time offset and the frequency offset are estimated in the OFDM system, time domain interpolation may be performed on a weight for which the frequency offset is compensated. Thereafter, the electronic device 700 may perform frequency offset re-compensation and time offset re-compensation processes. Accuracy of weight interpolation may increase according to the frequency offset re-compensation and time offset re-compensation processes.

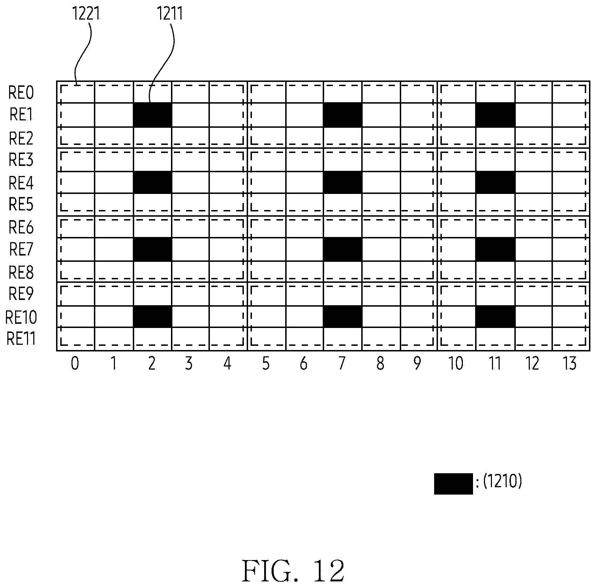

FIG. 12 illustrates an example of an operation for identifying a weight based on a copy mode. The copy mode may be a mode for obtaining a weight of an RE by copying a weight of another RE close to the RE. For example, an electronic device 700 may apply a rule for setting an area (or a copy boundary) for copying a weight according to a "time_num_sym" parameter. A resource (e.g., an RE) in the set area may all be set to the same weight. In a case of a frequency domain, weights may all be set to be the same in the same set area. The area for copying the weight may be set as in the following table.

[Table 6]

| Time_num_sym | Range | Sparse_sym index | symbol boundary for weight copy mode | |
| --- | --- | --- | --- | --- |
| | | | from | to |
| 1 | 0 | idx[0] | 0 | end |
| 2 | 0 | idx[0] | 0 | idx[0]+floor( ( idx[1] - idx[0] ) /2 ) |
| | 1 | idx[1] | idx[0]+floor( ( idx[1] - idx[0] ) /2 ) + 1 | end |
| 3 | 0 | idx[0] | 0 | idx[0]+floor( ( idx[1] - idx[0] ) /2 ) |
| | 1 | idx[1] | idx[0]+floor( ( idx[1] - idx[0] ) /2 ) + 1 | idx[1]+floor( ( idx[2] - idx[1] ) /2 ) |
| | 2 | idx[2] | idx[1]+floor( ( idx[2] - idx[1] ) /2 ) + 1 | end |
| 4 | 0 | idx[0] | 0 | idx[0]+floor( ( idx[1] - idx[0] ) /2 ) |
| | 1 | idx[1] | idx[0]+floor( ( idx[1] - idx[0] ) /2 ) + 1 | idx[1]+floor( ( idx[2] - idx[1] ) /2 ) |
| | 2 | idx[2] | idx[1]+floor( ( idx[2] - idx[1] ) /2 ) + 1 | idx[2]+floor( ( idx[3] - idx[2] ) /2 ) |
| | 3 | idx[3] | idx[2]+floor( ( idx[3] - idx[2] ) /2 ) + 1 | end |
| 6 | 0 | idx[0] | 0 | idx[0]+floor( ( idx[1] - idx[0] ) /2 ) |
| | 1 | idx[1] | idx[0]+floor( ( idx[1] - idx[0] ) /2 ) + 1 | idx[1]+floor( ( idx[2] - idx[1] ) /2 ) |
| | 2 | idx[2] | idx[1]+floor( ( idx[2] - idx[1] ) /2 ) + 1 | idx[2]+floor( ( idx[3] - idx[2] ) /2 ) |
| | 3 | idx[3] | idx[2]+floor( ( idx[3] - idx[2] ) /2 ) + 1 | idx[3]+floor( ( idx[4] - idx[3] ) /2 ) |
| | 4 | idx[4] | idx[3]+floor( ( idx[4] - idx[3] ) /2 ) + 1 | idx[4]+floor( ( idx[5] - idx[4] ) /2 ) |
| | 5 | idx[5] | idx[4]+floor( ( idx[5] - idx[4] ) /2 ) + 1 | end |

Referring to FIG. 12, in a case that frequency sparsity is '3' and a 'time_num_sym' parameter is '3', a sparse RE may be set as a plurality of REs 1210. One of the plurality of REs 1210 may be included in one area (e.g., an area 1221), respectively. Weights for REs included in the one area may all be set to be the same. For example, all weights for the REs included in the area 1221 may be set to be the same as a weight for an RE 1211. The electronic device 700 may identify (or calculate) only a weight for one RE for each area. The electronic device 700 may identify (or calculate) weights of remaining REs by copying a weight for one RE identified (or calculated) by a first weight calculation unit 751.

According to the above-described embodiments, as the electronic device 700 calculates weights for sparse REs, complexity of the electronic device 700 may be reduced. In addition, as the electronic device 700 selects efficient sparsity, calculation complexity of a weight may be reduced. Accordingly, loss of a block error rate (BLER), which is performance of an entire communication system, may be minimized.

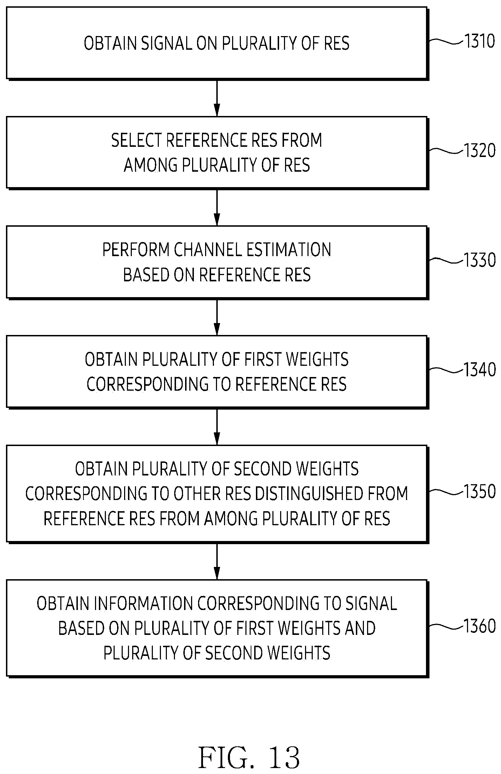

FIG. 13 illustrates a flowchart related to an operation of an electronic device. Operations 1310 to 1360 of FIG. 13 may be performed in the electronic device 700 of FIG. 7.

Referring to FIG. 13, in an operation 1310, the electronic device (e.g., a processor of the electronic device) may obtain a signal on a plurality of REs. For example, the electronic device may obtain a signal from a terminal on the plurality of RBs allocated to the terminal. For example, the signal may be transmitted through a PUSCH.

In an operation 1320, the electronic device may select reference REs from among the plurality of REs. For example, the electronic device may select the reference REs from among the plurality of REs based on a time interval between symbols and a frequency interval between the symbols. As an example, the time interval between the symbols may be related to the above-described time sparsity. As an example, the frequency interval between the symbols may be related to the above-described frequency sparsity. The electronic device may determine (or identify) the time interval between the symbols and/or the frequency interval between the symbols based on at least one of numerology, MCS, the number of antennas, the number of layers, channel selectivity, and a value for a doppler effect.

For example, the reference REs may be related to the above-described sparse REs.

For example, the reference REs may include an RE related to a demodulation reference signal (DMRS) from among the plurality of REs. According to an embodiment, the reference REs may include a data RE.

For example, the electronic device may transmit DMRS configuration information through an RRC message to receive a signal on the plurality of REs including the RE related to the DMRS. As an example, the DMRS configuration information may include one of information on a DMRS mapping type, the number of symbols of the signal, and information on an interval between DMRSs.

In an operation 1330, the electronic device may perform channel estimation based on the reference REs. For example, the electronic device may perform channel estimation based on the reference REs including the RE related to the DMRS. The electronic device may perform channel estimation through the RE related to the DMRS. A channel estimation result for the data RE from among the reference REs may be obtained based on the RE related to the DMRS.

In an operation 1340, the electronic device may obtain a plurality of first weights corresponding to the reference REs. For example, the electronic device may obtain the plurality of first weights corresponding to the reference REs based on the channel estimation result. As an example, the electronic device may obtain the plurality of first weights corresponding to the reference REs by identifying a first weight of each of the reference REs. In other words, the number of the reference REs may correspond to the number of the plurality of first weights.

For example, the electronic device may identify a noise covariance matrix for the reference REs based on the channel estimation result. The electronic device may obtain the plurality of first weights based on the noise covariance matrix. As an example, the electronic device may obtain the plurality of first weights through the above-described Equation 2 or Equation 4 based on the noise covariance matrix.

In an operation 1350, the electronic device may obtain a plurality of second weights corresponding to other REs distinguished from the reference REs from among the plurality of REs. For example, the electronic device may obtain the plurality of second weights corresponding to the other REs distinguished from the reference REs from among the plurality of REs based on the plurality of first weights.

For example, the electronic device may perform interpolation and extrapolation based on the plurality of first weights. The electronic device may obtain the plurality of second weights based on performing interpolation and extrapolation. As an example, in areas corresponding to an RB, weights for REs positioned between the reference REs may be obtained through interpolation. In the area corresponding to the RB, weights for REs positioned at an edge may be obtained through extrapolation.

For example, the electronic device may obtain the plurality of second weights by copying the plurality of first weights. As an example, the electronic device may set an area related to a third weight from among the plurality of first weights. The electronic device may identify at least one RE included in an area related to the third weight among the other REs distinguished from the reference REs. The electronic device may identify a weight corresponding to the at least one RE as the third weight. The at least one RE may be included in the plurality of second weights.

For example, the electronic device may perform interpolation and copying of the plurality of first weights based on the plurality of first weights. The electronic device may obtain the plurality of second weights based on performing interpolation and copying of the plurality of first weights. As an example, the weights for the REs positioned between the reference REs in the areas corresponding to the RB may be obtained through interpolation. In the area corresponding to the RB, the weights for the REs positioned at the edge may be obtained through copying of some of the plurality of first weights.

For example, the plurality of first weights may be determined based on inverse matrix calculation of a matrix for an estimated channel. The plurality of second weights may be determined based on bypassing the inverse matrix calculation. As the inverse matrix calculation for obtaining the plurality of second weights is not performed, complexity may be reduced.

In an operation 1360, the electronic device may obtain information corresponding to a signal based on the plurality of first weights and the plurality of second weights. For example, the electronic device may perform equalization of the signal based on the plurality of first weights and the plurality of second weights. The electronic device may perform LLR calculation after equalization of the signal is performed. The electronic device may obtain the information corresponding to the signal based on the LLR calculation.

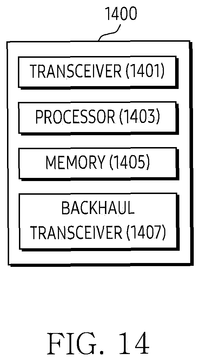

FIG. 14 illustrates an example of a functional configuration of an electronic device.

Referring to FIG. 14, an electronic device 1400 according to the above-described embodiments may be included in a base station (e.g., the base station 110 of FIG. 2) or a DU (e.g., the DU 210 of FIG. 2). The electronic device 1400 may correspond to the electronic device 700 of FIG. 7.

According to an embodiment, the electronic device 1400 may include a transceiver 1401, a processor 1403, memory 1405, and a backhaul transceiver 1407.

The transceiver 1401 may perform functions for transmitting and receiving a signal in a wired communication environment. The transceiver 1401 may include a wired interface for controlling a direct connection between a device and a device through a transmission medium (e.g., a copper wire or an optical fiber). For example, the transceiver 1401 may transmit an electrical signal to another device through a copper wire or may perform conversion between an electrical signal and an optical signal.

The transceiver 1401 may perform functions for transmitting and receiving a signal in a wireless communication environment. For example, the transceiver 1401 may perform a conversion function between a baseband signal and a bit stream according to a physical layer specification of a system. For example, when transmitting data, the transceiver 1401 generates complex-valued symbols by encoding and modulating a transmission bit string. In addition, when data is received, the transceiver 1401 restores a reception bit stream by demodulating and decoding a baseband signal. In addition, the transceiver 1401 may include a plurality of transmission/reception paths.

The transceiver 1401 transmits and receives a signal as described above. Accordingly, all or a part of the transceiver 1401 may be referred to as a 'communication unit', a 'transmission unit', a 'reception unit', or a 'transmission/reception unit'. In addition, in the following description, transmission and reception performed through a wireless channel are used to mean including processing as described above performed by the transceiver 1401.

The processor 1403 controls overall operations of the electronic device 1400. The processor 1403 may be referred to as a control unit. For example, the processor 1403 transmits and receives a signal through the transceiver 1401 (or through the backhaul transceiver 1407). In addition, the processor 1403 writes and reads data to and from the memory 1405. In addition, the processor 1403 may perform functions of a protocol stack required by a communication standard. According to an embodiment, the processor 1403 may obtain a transmission signal from a terminal 120 based on a whitening matrix applied to a channel estimated using reception reference signals and reception data. For example, the processor 1403 may perform calculations on the functional blocks of FIG. 6 or FIG. 7. Although only the processor 1403 is illustrated in FIG. 14, according to another implementation example, the electronic device 1400 may include two or more processors.

In the present disclosure, operations of the processor 1403 may be executed by software or may mean controlling hardware components such as a Field Programmable Gate Array (FPGA) or an application-specific integrated circuit (ASIC). In addition, the processor 1403 may include at least one of components, such as software components, object-oriented software components, class components, and task components, processes, functions, attributes, procedures, subroutines, segments of program code, drivers, firmware, microcode, circuitry, data, database, data structures, tables, arrays, and variables. The processor 1403 may include at least one module, and a term "module" includes a unit configured with hardware, software, or firmware. For example, a module may be used interchangeably with terms such as logic, logical block, component, or circuitry. The module may be a component that is integrally configured or a minimum unit performing one or more functions, or a part thereof. For example, the module may be configured with an ASIC.

For example, the processor 1403 may include at least some or all of the blocks illustrated in FIG. 7. The processor 1403 may perform functions of at least some or all of the blocks illustrated in FIG. 7.

The memory 1405 stores data such as a basic program, an application program, setting information, and the like for an operation of the electronic device 1400. The memory 1405 may be referred to as a storage unit. The memory 1405 may be configured with volatile memory, non-volatile memory, or a combination of the volatile memory and the non-volatile memory. In addition, the memory 1405 provides stored data according to a request of the processor 1403.

The electronic device 1400 may further include the backhaul transceiver 1407 for connection with a core network or another base station. The backhaul transceiver 1407 provides an interface for performing communication with other nodes in a network. In other words, the backhaul transceiver 1407 converts a bit stream transmitted from a base station to another node, for example, another access node, another base station, an upper node, a core network, and the like into a physical signal, and converts a physical signal received from another node into a bit stream.

According to an embodiment, a method performed by an electronic device may comprise obtaining a signal on a plurality of resource elements (REs). The method may comprise selecting, based on a time interval between symbols and a frequency interval between symbols, reference REs from among the plurality of REs. The method may comprise performing, based on the reference REs, channel estimation. The method may comprise obtaining, based on a result of the channel estimation, a plurality of first weights corresponding to the reference REs. The method may comprise obtaining, based on the plurality of first weights, a plurality of second weights corresponding to other REs distinct from the reference REs from among the plurality of REs. The method may comprise obtaining, based on the plurality of first weights and the plurality of second weights, information corresponding to the signal.

According to an embodiment, the method may comprise performing, based on the plurality of first weights, interpolation and extrapolation. The method may comprise, based on performing the interpolation and the extrapolation, obtaining the plurality of second weights.

According to an embodiment, the method may comprise obtaining the plurality of second weights by copying the plurality of first weights.

According to an embodiment, the method may comprise setting an area related to a third weight among the plurality of first weights. The method may comprise identifying at least one RE included in the area related to the third weight, among the other REs. The method may comprise identifying a weight corresponding to the at least one RE, included in the plurality of second weights, as the third weight.

According to an embodiment, the reference REs may include an RE related to demodulation reference signal (DMRS) among the plurality of REs.

According to an embodiment, the method may comprise transmitting DMRS configuration information through a radio resource control (RRC) message to a terminal connected to the electronic device.

According to an embodiment, the DMRS configuration information may include one of information on DMRS mapping type, the number of symbols of the signal, and information on an interval between the DMRSs.

According to an embodiment, the method may comprise identifying, based on the result of the channel estimation, a noise covariance matrix related to the reference REs. The method may comprise, based on the noise covariance matrix, obtaining the plurality of first weights.

According to an embodiment, the signal may be transmitted through a physical uplink shared channel (PUSCH).

According to an embodiment, the plurality of first weights may be determined based on inverse matrix calculation of a matrix for an estimated channel. The plurality of second weights may be determined based on bypassing the inverse matrix calculation.

According to an embodiment, the method may comprise performing equalization of the signal based on the plurality of first weights and the plurality of the second weights. The method may comprise, after the equalization of the signal is performed, performing log-likelihood ratio (LLR) calculation. The method may comprise obtaining, based on the LLR calculation, information corresponding to the signal.

According to an embodiment, an electronic device may comprise at least one processor and a transceiver. The at least one processor may be configured to obtain a signal on a plurality of resource elements (REs). The at least one processor may be configured to select, based on a time interval between symbols and a frequency interval between symbols, reference REs from among the plurality of REs. The at least one processor may be configured to perform, based on the reference REs, channel estimation. The at least one processor may be configured to obtain, based on a result of the channel estimation, a plurality of first weights corresponding to the reference REs. The at least one processor may be configured to obtain, based on the plurality of first weights, a plurality of second weights corresponding to other REs distinct from the reference REs from among the plurality of REs. The at least one processor may be configured to obtain, based on the plurality of first weights and the plurality of second weights, information corresponding to the signal.

According to an embodiment, the at least one processor may be configured to perform, based on the plurality of first weights, interpolation and extrapolation. The at least one processor may be configured to, based on performing the interpolation and the extrapolation, obtain the plurality of second weights.

According to an embodiment, the at least one processor may be configured to obtain the plurality of second weights by copying the plurality of first weights.

According to an embodiment, the at least one processor may be configured to set an area related to a third weight among the plurality of first weights. The at least one processor may be configured to identify at least one RE included in the area related to the third weight, among the other REs. The at least one processor may be configured to identify a weight corresponding to the at least one RE, included in the plurality of second weights, as the third weight.

According to an embodiment, the reference REs may include an RE related to demodulation reference signal (DMRS) among the plurality of REs.

According to an embodiment, the at least one processor may be configured to transmit DMRS configuration information through a radio resource control (RRC) message to a terminal connected to the electronic device.

According to an embodiment, the DMRS configuration information may include one of information on DMRS mapping type, the number of symbols of the signal, and information on an interval between the DMRSs.

According to an embodiment, the at least one processor may be configured to identify, based on the result of the channel estimation, a noise covariance matrix related to the reference REs. The at least one processor may be configured to, based on the noise covariance matrix, obtain the plurality of first weights.

According to an embodiment, the signal may be transmitted through a physical uplink shared channel (PUSCH).

According to an embodiment, each first weight of the plurality of first weights may be determined based on inverse matrix calculation for an estimated channel. Each second weight of the plurality of second weights may be determined based on bypassing the inverse matrix calculation.

According to an embodiment, a digital unit (DU) may comprise memory storing instructions, at least one processor, and a transceiver. The instructions, when executed by the at least one processor, may cause the DU to obtain a signal on a plurality of resource elements (REs). The instructions, when executed by the at least one processor, may cause the DU to select, based on a time interval between symbols and a frequency interval between symbols, reference REs from among the plurality of REs. The instructions, when executed by the at least one processor, may cause the DU to perform, based on the reference REs, channel estimation. The instructions, when executed by the at least one processor, may cause the DU to obtain, based on a result of the channel estimation, a plurality of first weights corresponding to the reference REs. The instructions, when executed by the at least one processor, may cause the DU to obtain, based on the plurality of first weights, a plurality of second weights corresponding to other REs distinct from the reference REs from among the plurality of REs. The instructions, when executed by the at least one processor, may cause the DU to obtain, based on the plurality of first weights and the plurality of second weights, information corresponding to the signal.

According to an embodiment, the instructions, when executed by the at least one processor, may cause the DU to perform, based on the plurality of first weights, interpolation and extrapolation. The instructions, when executed by the at least one processor, may cause the DU to, based on performing the interpolation and the extrapolation, obtain the plurality of second weights.

According to an embodiment, the instructions, when executed by the at least one processor, may cause the DU to obtain the plurality of second weights by copying the plurality of first weights.

According to an embodiment, the instructions, when executed by the at least one processor, may cause the DU to set an area related to a third weight among the plurality of first weights. The instructions, when executed by the at least one processor, may cause the DU to identify at least one RE included in the area related to the third weight, among the other REs. The instructions, when executed by the at least one processor, may cause the DU to identify a weight corresponding to the at least one RE, included in the plurality of second weights, as the third weight.

According to an embodiment, the reference REs may include an RE related to demodulation reference signal (DMRS) among the plurality of REs.

According to an embodiment, the instructions, when executed by the at least one processor, may cause the DU to transmit DMRS configuration information through a radio resource control (RRC) message to a terminal.

According to an embodiment, the DMRS configuration information may include one of information on DMRS mapping type, the number of symbols of the signal, and information on an interval between the DMRSs.

According to an embodiment, the instructions, when executed by the at least one processor, may cause the DU to identify, based on the result of the channel estimation, a noise covariance matrix related to the reference REs. The instructions, when executed by the at least one processor, may cause the DU to, based on the noise covariance matrix, obtain the plurality of first weights.

According to an embodiment, the signal may be transmitted through a physical uplink shared channel (PUSCH).

According to an embodiment, the plurality of first weights may be determined based on inverse matrix calculation of a matrix for an estimated channel. The plurality of second weights may be determined based on bypassing the inverse matrix calculation.

According to an embodiment, the instructions, when executed by the at least one processor, may cause the DU to perform equalization of the signal based on the plurality of first weights and the plurality of the second weights. The instructions, when executed by the at least one processor, may cause the DU to, after the equalization of the signal is performed, perform log-likelihood ratio (LLR) calculation. The instructions, when executed by the at least one processor, may cause the DU to obtain, based on the LLR calculation, information corresponding to the signal.

According to an embodiment, a method for receiving a signal may comprise obtaining a signal on a plurality of resource elements (REs). The method may comprise selecting, based on a time interval between symbols and a frequency interval between symbols, reference REs from among the plurality of REs. The method may comprise performing, based on the reference REs, channel estimation. The method may comprise obtaining, based on a result of the channel estimation, a plurality of first weights corresponding to the reference REs. The method may comprise obtaining, based on the plurality of first weights, a plurality of second weights corresponding to other REs distinct from the reference REs from among the plurality of REs. The method may comprise obtaining, based on the plurality of first weights and the plurality of second weights, information corresponding to the signal.

According to an embodiment, the method may comprise performing, based on the plurality of first weights, interpolation and extrapolation. The method may comprise, based on performing the interpolation and the extrapolation, obtaining the plurality of second weights.

According to an embodiment, a radio unit (RU) may comprise memory storing instructions, at least one processor, and a transceiver. The instructions, when executed by the at least one processor, may cause the RU to obtain a signal on a plurality of resource elements (REs). The instructions, when executed by the at least one processor, may cause the RU to select, based on a time interval between symbols and a frequency interval between symbols, reference REs from among the plurality of REs. The instructions, when executed by the at least one processor, may cause the RU to perform, based on the reference REs, channel estimation. The instructions, when executed by the at least one processor, may cause the RU to obtain, based on a result of the channel estimation, a plurality of first weights corresponding to the reference REs. The instructions, when executed by the at least one processor, may cause the RU to obtain, based on the plurality of first weights, a plurality of second weights corresponding to other REs distinct from the reference REs from among the plurality of REs. The instructions, when executed by the at least one processor, may cause the RU to obtain, based on the plurality of first weights and the plurality of second weights, information corresponding to the signal.

According to an embodiment, a non-transitory computer readable storage medium may store instructions. The instructions, when executed by a processor of a digital unit (DU), may cause the DU to obtain a signal on a plurality of resource elements (REs). The instructions, when executed by a processor of a digital unit (DU), may cause the DU to select, based on a time interval between symbols and a frequency interval between symbols, reference REs from among the plurality of REs. The instructions, when executed by a processor of a digital unit (DU), may cause the DU to perform, based on the reference REs, channel estimation. The instructions, when executed by a processor of a digital unit (DU), may cause the DU to obtain, based on a result of the channel estimation, a plurality of first weights corresponding to the reference REs. The instructions, when executed by a processor of a digital unit (DU), may cause the DU to obtain, based on the plurality of first weights, a plurality of second weights corresponding to other REs distinct from the reference REs from among the plurality of REs. The instructions, when executed by a processor of a digital unit (DU), may cause the DU to obtain, based on the plurality of first weights and the plurality of second weights, information corresponding to the signal.

According to the above-described embodiment, an electronic device (e.g., the electronic device 700 or the electronic device 1400) may be a base station or a DU of the base station. The electronic device may receive a PUSCH from a UE. In order to perform equalization, MMSE weights for all REs should be obtained. In general, channel estimation is performed for all REs, and the MMSE weights for all REs are obtained according to a channel estimation result, but according to the above-described embodiment, the MMSE weights for all REs may be obtained by performing interpolation, extrapolation, and copy after obtaining MMSE weights for some REs without obtaining the MMSE weights for all REs. Accordingly, complexity may be significantly reduced.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. A digital unit (DU) comprising:

   memory storing instructions,
   at least one processor, and
   a transceiver,
   wherein the instructions, when executed by the at least one processor, cause the DU to:

      obtain a signal on a plurality of resource elements (REs),
      select, based on a time interval between symbols and a frequency interval between symbols, reference REs from among the plurality of REs
      perform, based on the reference REs, channel estimation,
      obtain, based on a result of the channel estimation, a plurality of first weights corresponding to the reference REs,
      obtain, based on the plurality of first weights, a plurality of second weights corresponding to other REs distinct from the reference REs from among the plurality of REs, and
      obtain, based on the plurality of first weights and the plurality of second weights, information corresponding to the signal.

2. The DU of claim 1, wherein the instructions, when executed by the at least one processor, further cause the DU to:

   perform, based on the plurality of first weights, interpolation and extrapolation, and
   based on performing the interpolation and the extrapolation, obtain the plurality of second weights.

3. The DU of claim 1, wherein the instructions, when executed by the at least one processor, further cause the DU to: obtain the plurality of second weights by copying the plurality of first weights.

4. The DU of claim 3, wherein the instructions, when executed by the at least one processor, further cause the DU to:

   set an area related to a third weight among the plurality of first weights, and
   identify at least one RE included in the area related to the third weight, among the other REs,
   identify a weight corresponding to the at least one RE, included in the plurality of second weights, as the third weight.

5. The DU of claim 1, wherein the reference REs include a RE related to demodulation reference signal (DMRS) among the plurality of REs.

6. The DU of claim 5, wherein the instructions, when executed by the at least one processor, further cause the DU to: transmit DMRS configuration information through a radio resource control (RRC) message to a terminal.

7. The DU of claim 6, wherein the DMRS configuration information includes one of information on DMRS mapping, the number of symbols of the signal, and information on an interval between the DMRSs.

8. The DU of claim 1, wherein the instructions, when executed by the at least one processor, further cause the DU to:

identify, based on the result of the channel estimation, a noise covariance matrix related to the reference REs, and based on the noise covariance matrix, obtain the plurality of first weights.

9. The DU of claim 1, wherein the signal is transmitted through a physical uplink shared channel (PUSCH).

10. The DU of claim 1, wherein the plurality of first weights are determined based on inverse matrix calculation of a matrix for an estimated channel, and
wherein the plurality of second weights are determined based on bypassing the inverse matrix calculation.

11. The DU of claim 1, wherein the instructions, when executed by the at least one processor, further cause the DU to:

perform equalization of the signal based on the plurality of first weights and the plurality of the second weights,
after the equalization of the signal is performed, perform log-likelihood ratio (LLR) calculation, and
obtain, based on the LLR calculation, information corresponding to the signal.

12. A method for receiving a signal, comprising:

obtaining a signal on a plurality of resource elements (REs),
selecting, based on a time interval between symbols and a frequency interval between symbols, reference REs from among the plurality of REs,
performing, based on the reference REs, channel estimation,
obtaining, based on a result of the channel estimation, a plurality of first weights corresponding to the reference REs,
obtaining, based on the plurality of first weights, a plurality of second weights corresponding to other REs distinct from the reference REs from among the plurality of REs, and
obtaining, based on the plurality of first weights and the plurality of second weights, information corresponding to the signal.

13. The method of claim 12, wherein the method further comprises:

performing, based on the plurality of first weights, interpolation and extrapolation, and
based on performing the interpolation and the extrapolation, obtaining the plurality of second weights.

14. A radio unit (RU), comprising:

memory storing instructions,
at least one processor, and
a transceiver,
wherein the instructions, when executed by the at least one processor, cause the RU to:

obtain a signal on a plurality of resource elements (REs),
select, based on a time interval between symbols and a frequency interval between symbols, reference REs from among the plurality of REs
perform, based on the reference REs, channel estimation,
obtain, based on a result of the channel estimation, a plurality of first weights corresponding to the reference REs,
obtain, based on the plurality of first weights, a plurality of second weights corresponding to other REs distinct from the reference REs from among the plurality of REs, and
obtain, based on the plurality of first weights and the plurality of second weights, information corresponding to the signal.

15. A non-transitory computer readable storage medium storing instructions, wherein the instructions, when executed by a processor of a digital unit (DU), cause the DU to:

obtain a signal on a plurality of resource elements (REs),
select, based on a time interval between symbols and a frequency interval between symbols, reference REs from among the plurality of REs
perform, based on the reference REs, channel estimation,

obtain, based on a result of the channel estimation, a plurality of first weights corresponding to the reference REs, obtain, based on the plurality of first weights, a plurality of second weights corresponding to other REs distinct from the reference REs from among the plurality of REs, and

obtain, based on the plurality of first weights and the plurality of second weights, information corresponding to the signal.

FIG. 1

FIG. 2

FIG. 3

FIG. 4

500 501 502 503 504 505 506 507 508 509 510 511 512 513

| Sym 0 | Sym 1 | Sym 2 | Sym 3 | Sym 4 | Sym 5 | Sym 6 | Sym 7 | Sym 8 | Sym 9 | Sym 10 | Sym 11 | Sym 12 | Sym 13 |

FIG. 5

FIG. 6

FIG. 7

SELECT SPARSITY — 810

PERFORM CHANNEL ESTIMATION
BASED ON SPARSITY — 820

CALCULATE $R_{nn}$ BASED ON
ESTIMATED CHANNEL VALUE — 830

CALCULATE WEIGHT BASED ON SPARSITY — 840

CALCULATE REMAINING WEIGHTS USING
WEIGHT BASED ON SPARSITY — 850

FIG. 8

FIG. 9

FIG. 10

FIG. 11

FIG. 12

OBTAIN SIGNAL ON PLURALITY OF RES ~1310

SELECT REFERENCE RES FROM
AMONG PLURALITY OF RES ~1320

PERFORM CHANNEL ESTIMATION
BASED ON REFERENCE RES ~1330

OBTAIN PLURALITY OF FIRST WEIGHTS
CORRESPONDING TO REFERENCE RES ~1340

OBTAIN PLURALITY OF SECOND WEIGHTS
CORRESPONDING TO OTHER RES DISTINGUISHED FROM
REFERENCE RES FROM AMONG PLURALITY OF RES ~1350

OBTAIN INFORMATION CORRESPONDING TO SIGNAL
BASED ON PLURALITY OF FIRST WEIGHTS AND
PLURALITY OF SECOND WEIGHTS ~1360

FIG. 13

1400

TRANSCEIVER (1401)

PROCESSOR (1403)

MEMORY (1405)

BACKHAUL
TRANSCEIVER (1407)

FIG. 14

# INTERNATIONAL SEARCH REPORT

| International application No. |
|---|
| **PCT/KR2023/021757** |

## A. CLASSIFICATION OF SUBJECT MATTER

**H04L 25/02**(2006.01)i; **H04L 5/00**(2006.01)i; **H04L 27/01**(2006.01)i

According to International Patent Classification (IPC) or to both national classification and IPC

## B. FIELDS SEARCHED

Minimum documentation searched (classification system followed by classification symbols)

H04L 25/02(2006.01); H03K 5/159(2006.01); H04B 1/00(2006.01); H04B 7/0456(2017.01); H04L 27/00(2006.01); H04L 5/00(2006.01); H04W 72/04(2009.01); H04W 88/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DU(digital unit), RU(radio unit), 기준 RE(reference resource element), 가중치 (weight), 보간(interpolation), 외삽(extrapolation)

## C. DOCUMENTS CONSIDERED TO BE RELEVANT

| Category* | Citation of document, with indication, where appropriate, of the relevant passages | Relevant to claim No. |
|---|---|---|
| Y | US 2021-0306039 A1 (MAVENIR SYSTEMS, INC.) 30 September 2021 (2021-09-30)<br>See paragraphs [0052], [0068], [0105]-[0108] and [0164]; and figures 1, 5 and 16. | 1-15 |
| Y | US 2011-0044383 A1 (MARUYAMA, Kunifusa et al.) 24 February 2011 (2011-02-24)<br>See paragraphs [0022]-[0023], [0046]-[0047], [0051]-[0055] and [0066]; and figures 1-2. | 1-15 |
| Y | US 2022-0393817 A1 (WISIG NETWORKS PRIVATE LIMITED) 08 December 2022 (2022-12-08)<br>See paragraphs [0246], [0375] and [0377]; and figure 25. | 5-7,11 |
| A | US 2021-0091795 A1 (TELEFONAKTIEBOLAGET LM ERICSSON (PUBL)) 25 March 2021 (2021-03-25)<br>See paragraphs [0153]-[0167]; and figure 9. | 1-15 |
| A | US 2011-0286412 A1 (MOCHIDA, Eiji et al.) 24 November 2011 (2011-11-24)<br>See paragraphs [0050]-[0123]; and figures 1-10. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2024** | **18 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021757**

| Patent document cited in search report | | | Publication date (day/month/year) | Patent family member(s) | | | Publication date (day/month/year) |
|---|---|---|---|---|---|---|---|
| US | 2021-0306039 | A1 | 30 September 2021 | EP | 3896860 | A1 | 20 October 2021 |
| | | | | EP | 3896860 | B1 | 11 October 2023 |
| | | | | US | 11418239 | B2 | 16 August 2022 |
| US | 2011-0044383 | A1 | 24 February 2011 | CN | 101981845 | A | 23 February 2011 |
| | | | | CN | 101981845 | B | 06 November 2013 |
| | | | | EP | 2259465 | A1 | 08 December 2010 |
| | | | | JP | 5093343 | B2 | 12 December 2012 |
| | | | | KR | 10-2010-0127231 | A | 03 December 2010 |
| | | | | US | 8477865 | B2 | 02 July 2013 |
| | | | | WO | 2009-119645 | A1 | 01 October 2009 |
| US | 2022-0393817 | A1 | 08 December 2022 | None | | | |
| US | 2021-0091795 | A1 | 25 March 2021 | CN | 109644026 | A | 16 April 2019 |
| | | | | CN | 109644026 | B | 08 March 2022 |
| | | | | EP | 3510703 | A1 | 17 July 2019 |
| | | | | EP | 3510704 | A1 | 17 July 2019 |
| | | | | US | 10879941 | B2 | 29 December 2020 |
| | | | | US | 11128322 | B2 | 21 September 2021 |
| | | | | US | 2019-0199379 | A1 | 27 June 2019 |
| | | | | US | 2020-0127717 | A1 | 23 April 2020 |
| | | | | WO | 2018-048332 | A1 | 15 March 2018 |
| | | | | WO | 2018-048333 | A1 | 15 March 2018 |
| US | 2011-0286412 | A1 | 24 November 2011 | BR | PI0921362 | A2 | 24 September 2019 |
| | | | | CN | 102210108 | A | 05 October 2011 |
| | | | | CN | 102210108 | B | 07 May 2014 |
| | | | | CN | 102598561 | A | 18 July 2012 |
| | | | | CN | 102598561 | B | 26 November 2014 |
| | | | | DE | 112009002687 | T5 | 21 March 2013 |
| | | | | JP | 2010-136347 | A | 17 June 2010 |
| | | | | JP | 2011-101167 | A | 19 May 2011 |
| | | | | JP | 2011-101171 | A | 19 May 2011 |
| | | | | JP | 5251833 | B2 | 31 July 2013 |
| | | | | JP | 5304598 | B2 | 02 October 2013 |
| | | | | JP | 5375520 | B2 | 25 December 2013 |
| | | | | KR | 10-2011-0084885 | A | 26 July 2011 |
| | | | | US | 2012-0201221 | A1 | 09 August 2012 |
| | | | | US | 2014-0119308 | A1 | 01 May 2014 |
| | | | | US | 8842655 | B2 | 23 September 2014 |
| | | | | US | 8923227 | B2 | 30 December 2014 |
| | | | | US | 8982797 | B2 | 17 March 2015 |
| | | | | WO | 2010-053019 | A1 | 14 May 2010 |
| | | | | WO | 2011-052575 | A1 | 05 May 2011 |

Form PCT/ISA/210 (patent family annex) (July 2022)